# EUROPEAN PATENT APPLICATION

(11) **EP 3 410 710 A1**
(43) Date of publication of application: **05.12.2018**
(21) Application number: 17744462.7
(22) Date of filing: 30.01.2017
(51) Int. Cl.: H04N 19/129, H04N 19/159, H04N 19/176, H04N 19/593

(54) **ENCODING DEVICE, DECODING DEVICE, AND PROGRAM**

(30) Priority: 28.01.2016 JP 2016014816; 27.04.2016 JP 2016089404
(71) Applicant: Nippon Hoso Kyokai, Tokyo 150-8001 (JP)
(72) Inventor: IWAMURA, Shunsuke, Tokyo 157-8510 (JP); NEMOTO, Shimpei, Tokyo 157-8510 (JP); ICHIGAYA, Atsuro, Tokyo 157-8510 (JP); MATSUO, Yasutaka, Tokyo 157-8510 (JP)
(74) Representative: Hernandez, Yorck
(86) International application number: PCT/JP2017/003204
(87) International publication number: WO 2017/131233

(57) **Abstract**

Problem: It is possible to improve prediction accuracy and encoding efficiency without increasing the amount of information to be transmitted by an encoding device and without increasing calculation time on the encoding device side.

Solution: An encoding device 1 of the present invention includes: an encoding order controller 12 configured to determine an encoding order of TU#A1 to TU#A4 in CU#A based on a prediction mode and a decoded image generator 14 configured to generate a decoded image based on the encoding order and a method of dividing CU#A into TU#A1 to TU#A4.

## Description

### TECHNICAL FIELD

The present invention relates to an encoding device, a decoding device, and a program.

### BACKGROUND ART

Conventionally, studies on encoding methods have been conducted so as to compress the amount of data when transmitting or storing still images or moving images (videos).

Recently, in the video encoding technology, ultrahigh-resolution video represented by 8K-SHV (Super Hi-Vision) is spreading, and encoding schemes such as H.264/AVC (Advanced Video Coding) and H.265/HEVC (High Efficiency Video Coding) are known as a method for transmitting a moving image with a vast amount of data through a broadcast wave or an IP network.

A moving image (video) encoding method represented by H.265/HEVC (High Efficiency Video Coding) is configured to generate a residual signal by performing prediction while switching between two types of prediction, that is, inter prediction using temporal correlation between frames and intra prediction using spatial correlation within a frame, and outputting a stream obtained by orthogonal transformation processing, loop filter processing, or entropy coding processing.

In intra prediction in HEVC, there are 35 types of modes including planar prediction, DC prediction, and direction prediction, and intra prediction using neighboring decoded reference pixels is performed according to a mode determined by an encoder.

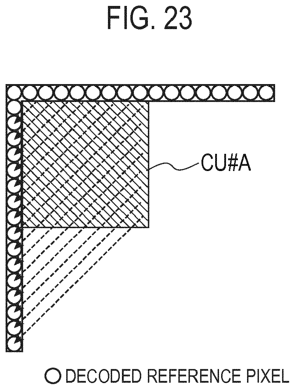

Fig. 23 illustrates an example of intra prediction in a conventional HEVC. Specifically, in Fig. 23, direction prediction is performed in a direction from the lower left to the upper right (a direction opposite to a direction indicated by a dashed line arrow in Fig. 23), and a pixel on a dashed arrow is predicted by using a lower left reference pixel. In the drawings of this specification, the arrow indicating the direction (prediction direction) of the prediction mode is assumed to go from the pixel targeted for intra prediction to the reference pixel in the same manner as described in the HEVC specification (the same applies hereinafter).

Here, in the conventional HEVC, there is a mode in which a coding target block (hereinafter referred to as "coding unit (CU)") is divided into a plurality of transformation blocks (hereinafter referred to as "transform unit (TU)"), and TU division is performed such that prediction, orthogonal transformation processing, or quantization processing is performed for each of TUs.

In the intra prediction in which the TU division is performed, a common mode is used for all the TUs, but as the decoded reference pixels used in the TU that performs a next encoding process, it is possible to reuse the locally decoded image of the TU neighboring to the left side or the upper side of the TU.

In the actual direction prediction, as illustrated in Fig. 23, a predicted image is generated by extrapolating decoded reference pixels neighboring to the left side of CU#A (pixels after processing such as filtering) to the position indicated by the start point of the dashed line arrow in Fig. 23. In the example of Fig. 23, it is assumed that all reference pixels neighboring to the upper side and the left side of CU#A have been decoded.

Here, in the intra prediction, in a CU in which there is no neighboring decoded reference pixel such as a CU positioned at the top left in a frame, a reference pixel to be used for generating a predicted image is created by filling a predetermined value (for example, "512" in the case of a 10-bit moving image).

In addition, in the conventional HEVC, since the encoding process is performed in the encoding order (Z scan order or raster scan order) of upper left CU → upper right CU → lower left CU → lower right CU, the reference pixel may not be decoded. In such a case, a predicted image is generated by using a value obtained by zero-order extrapolation of the nearest decoded reference pixel (see, for example, Non-Patent Literature 1).

In particular, in the intra prediction in which the TU division is performed, due to the encoding process in the raster scan order, the reference pixels positioned at the lower left or upper right of the CU are often not decoded, other than at the edge of the frame due to the division shape of the TU. In such a case, when direction prediction is performed from the direction in which reference pixels that are not decoded exist, the prediction accuracy decreases, resulting in a reduction in encoding efficiency.

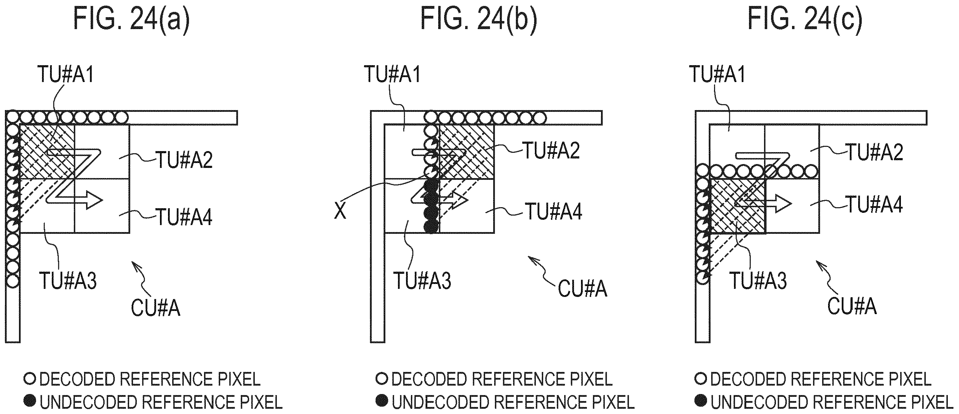

Hereinafter, such problems will be specifically described with reference to Fig. 24. Fig. 24 illustrates an example of intra prediction when TU division is performed in a conventional HEVC.

In this example, as illustrated in Fig. 24(a), all the reference pixels of TU#A1 (the upper left TU in CU#A) have been decoded as in the case of the example of Fig. 23. Similarly, as illustrated in Fig. 24 (c), when intra prediction of TU#A3 (the lower left TU in CU#A) is performed, since TU#A1 has already been decoded, all reference pixels have already been decoded.

On the other hand, as illustrated in Fig. 24(b), the reference pixel (for example, the white circle in Fig. 24(b)) positioned in the TU #A1 is decoded, but since the reference pixels (for example, the black circles in Fig. 24(b)) positioned within TU#A3 (the lower left TU in CU#A) are not decoded, it cannot be used as it is as the reference pixel for generating the predicted image of TU#A2 (the upper right TU in CU#A).

Therefore, in the conventional HEVC, the value of the reference pixel (for example, "X" in Fig. 24(b)) positioned at the bottom of the decoded reference pixel positioned in TU#A1 is copied to the undecoded reference pixel (for example, the black circle in Fig. 24(b)) positioned in the same column in TU#A3 (TU in the lower left in CU#A).

Therefore, as in the example of Fig. 24, if the direction prediction is performed from the lower left to the upper right, since most of the generated predicted images are constituted by undecoded reference pixels filled by copying, there is a problem that the prediction accuracy decreases and the encoding efficiency decreases.

In order to solve such problems, in the intra prediction, there is known a technique for improving prediction accuracy by giving the degree of freedom in the encoding order of U type, X type, or the like, in addition to raster scanning order (for example, Z type), as the order of encoding processing for a plurality of TUs existing in the CU (see Non-Patent Literature 2).

In addition, in the conventional intra prediction in H.265/HEVC, a CU is divided into a plurality of blocks (hereinafter referred to as "prediction unit (PU)") to which a prediction mode is assigned (hereinafter referred to as "case where N×N division is performed"). In such a case, the PU encoding process is performed in the Z scan order described above. Therefore, for example, when the prediction mode of the prediction direction other than the upper left is assigned to a certain PU, the reference pixel is not decoded. Hence, there is a problem that the prediction accuracy decreases and the encoding efficiency decreases.

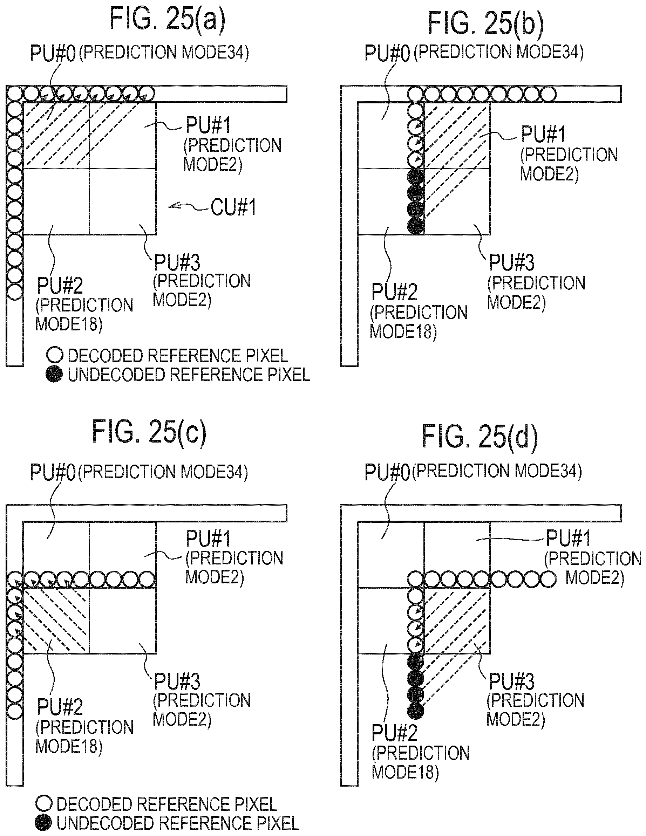

Hereinafter, such problems will be specifically described with reference to Figs. 25(a) to 25(d). In the drawings of this specification, the arrow indicating the prediction direction of the prediction mode is assumed to go from the pixel targeted for intra prediction to the reference pixel in the same manner as described in the H.265/HEVC specification (the same applies hereinafter).

Fig. 25 illustrates an example of intra prediction in the case of dividing CU#1 into PU#0 to PU#3 in the conventional H.265/HEVC.

In the example of Fig. 25, it is assumed that the prediction mode in PU#0 is "34", the prediction mode in PU#1 is "2", the prediction mode in PU#2 is "18", and the prediction in PU#3 is "2".

As illustrated in Figs. 25(a) and 25(c), all the reference pixels of PU#0 and PU#2 have been decoded.

On the other hand, as illustrated in Fig. 25(b), when encoding PU#1, reference pixels positioned in PU#2 are not decoded at this point, and thus, it cannot be used as the reference pixel for generating the predicted image of PU#1 as it is. Therefore, in the conventional H.265/HEVC, the value of the reference pixel P#0 positioned at the bottom of the decoded reference pixel positioned in PU#0 is copied to the undecoded reference pixel positioned in the same column in PU#2.

Therefore, when direction prediction as illustrated in Fig. 25(b) is performed, since part of the generated predicted image is constituted by undecoded reference pixels filled by copying, there is a problem that the prediction accuracy decreases and the encoding efficiency decreases. The same also applies to direction prediction as illustrated in Fig. 25(d).

In order to solve such problems, in the intra prediction, there is known a technique for improving prediction accuracy by giving the degree of freedom in the encoding order by using U type scan order or X type san order in addition to the above-described Z scan order (see Non-Patent Literature 2).

### CITATION LIST

### NON PATENT LITERATURE

Non Patent Literature 1: Okubo Sakae supervisor, "Impress Standard Textbook Series H.265/HEVC Textbook", Impress Japan Co., Ltd., October 21, 2013
Non Patent Literature 2: Mochizuki et al., "An adaptive intra prediction method based on mean value coordinates", IPSJ research report, vol, 2012-AVM-77, No. 12

### SUMMARY OF INVENTION

### TECHNICAL PROBLEM

However, in the technique defined in the above-mentioned Non Patent Literature 1 and the like, since it is necessary to transmit flags as to what type of encoding processing is to be used in CU units, it is necessary for all the combinations to be tried on the encoding device side in order to select which encoding processing order is better from among all encoding processing orders, in addition to increasing the amount of information to be transmitted. Therefore, there is a problem that the calculation time on the encoding device side increases.

Therefore, the present invention has been made to solve the above-mentioned problems, and it is an object of the present invention to provide an encoding device, a decoding device, and a program, capable of improving prediction accuracy and encoding efficiency without increasing the amount of information to be transmitted by the encoding device and without increasing the calculation time on the encoding device side.

### SOLUTION TO PROBLEM

A first feature of the present invention is an encoding device configured to encode an original image of a frame unit constituting a video by dividing the original image into encoding target blocks. The encoding device is characterized by comprising: an encoding order controller configured to determine an encoding order of transformation blocks in the encoding target blocks based on a prediction mode; and a decoded image generator configured to generate a decoded image based on the encoding order and a method of dividing the encoding target block into the transformation blocks.

A second feature of the present invention is a decoding device configured to perform decoding by dividing an original image of a frame unit constituting a video into encoding target blocks. The decoding device is characterized by comprising: a decoding order controller configured to determine a decoding order of transformation blocks in the encoding target blocks based on a prediction mode; and a decoded image generator configured to generate a decoded image based on the decoding order and a method of dividing the encoding target block into the transformation blocks.

A third feature of the present invention is an encoding device configured to encode an original image of a frame unit constituting a video by dividing the original image into encoding target blocks. The encoding device is characterized by comprising: an encoding order controller configured to, if the encoding target block is divided into blocks to which prediction modes are allocated, determine an encoding order of the blocks based on a combination of the prediction modes in each of the blocks; and a decoded image generator configured to generate a decoded image based on the encoding order and a method of dividing the encoding target block into the blocks.

A fourth feature of the present invention is a decoding device configured to perform decoding by dividing an image of a frame unit constituting a video into encoding target blocks. The decoding device is characterized by comprising: a decoding order controller configured to, if the encoding target block is divided into blocks to which prediction modes are allocated, determine a decoding order of the blocks based on a combination of the prediction modes in each of the blocks; and a decoded image generator configured to generate a decoded image based on the decoding order and a method of dividing the encoding target block into the blocks.

A fifth feature of the present invention is a program for causing a computer to function as the encoding device according to any one of the first feature and the third feature.

A sixth feature of the present invention is a program for causing a computer to function as the decoding device according to any one of the second feature and the fourth feature.

### ADVANTAGEOUS EFFECTS OF INVENTION

According to the present invention, it is possible to provide an encoding device, a decoding device, and a program, capable of improving prediction accuracy and encoding efficiency without increasing the amount of information to be transmitted by the encoding device and without increasing the calculation time on the encoding device side.

### BRIEF DESCRIPTION OF DRAWINGS

Fig. 1 is a functional block diagram of an encoding device 1 according to a first embodiment.
Fig. 2 is a diagram illustrating an example of intra prediction when TU division is performed in the first embodiment.
Fig. 3 is a flowchart illustrating an operation of an encoding device 1 according to the first embodiment.
Fig. 4 is a functional block diagram of a decoding device 3 according to the first embodiment.
Fig. 5 is a flowchart illustrating the operation of the decoding device 3 according to the first embodiment.
Fig. 6 is a diagram illustrating an example of intra prediction when TU division is performed in a second embodiment.
Fig. 7 is a flowchart illustrating an operation of an encoding device 1 according to the second embodiment.
Fig. 8 is a flowchart illustrating an operation of a decoding device 3 according to the second embodiment.
Fig. 9 is a flowchart illustrating an operation of an encoding device 1 according to a third embodiment.
Fig. 10 is a flowchart illustrating an operation of a decoding device 3 according to the third embodiment.
Fig. 11 is a diagram illustrating an example of a processing order corresponding to a processing order index and a division shape at the time of sequentially processing from TU on the left side.
Fig. 12 is a diagram illustrating an example of a method of dividing a CU into PUs according to a fourth embodiment.
Fig. 13 is a functional block diagram of an encoding device 1 according to the fourth embodiment.
Fig. 14 is a diagram illustrating an example of a grouping method of prediction modes in the fourth embodiment.
Fig. 15 is a diagram illustrating an example of a table used for determining encoding order and decoding order in the fourth embodiment.
Fig. 16 is a diagram illustrating an example of encoding order and decoding order in the fourth embodiment.
Fig. 17 is a diagram illustrating an example of encoding order and decoding order in the fourth embodiment.
Fig. 18 is a flowchart illustrating an operation of an encoding device 1 according to the fourth embodiment.
Fig. 19 is a functional block diagram of a decoding device 3 according to the fourth embodiment.
Fig. 20 is a flowchart illustrating an operation of a decoding device 3 according to the fourth embodiment.
Fig. 21 is a diagram illustrating an example of a table used for determining encoding order and decoding order in a fifth embodiment.
Fig. 22 is a diagram illustrating an example of encoding order and decoding order in the fifth embodiment.
Fig. 23 illustrates an example of intra prediction in a conventional HEVC.
Fig. 24 is a diagram illustrating an example of intra prediction when TU division is performed in a conventional HEVC.
Fig. 25 is a diagram for explaining a conventional technique.

### DESCRIPTION OF EMBODIMENTS

### (First Embodiment)

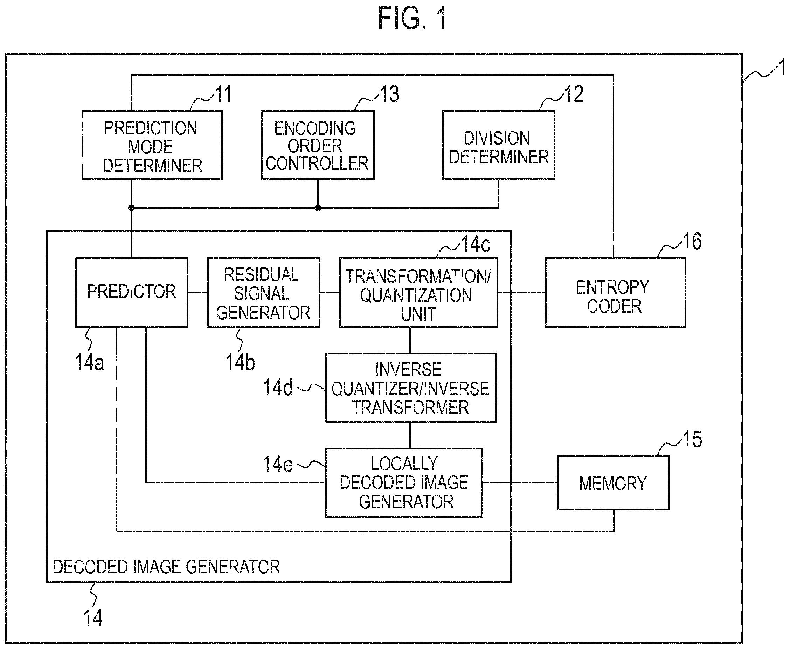

Hereinafter, an encoding device 1 and a decoding device 3 according to a first embodiment of the present invention will be described with reference to Figs. 1 to 5. Here, the encoding device 1 and the decoding device 3 according to the present embodiment are configured to correspond to intra prediction in a video encoding method such as HEVC. The encoding device 1 and the decoding device 3 according to the present embodiment are configured so as to correspond to arbitrary video encoding methods as long as they are a video encoding method that performs intra prediction.

The encoding device 1 according to the present embodiment is configured to encode an original image of a frame unit constituting a video by dividing the original image into CUs. In addition, the encoding device 1 according to the present embodiment is configured to be able to divide a CU into a plurality of TUs.

In the present embodiment, in a CU in which there is no neighboring decoded reference pixel such as a CU positioned at the top left in a frame, a reference pixel to be used for generating a predicted image is created by filling a predetermined value (for example, "512" in the case of a 10-bit video). Therefore, it is assumed that all the pixels neighboring to the left side of the CU to be encoded can be used as reference pixels.

As illustrated in Fig. 1, the encoding device 1 according to the present embodiment includes a prediction mode determiner 11, a division determiner 12, an encoding order controller 13, a decoded image generator 14, a memory 15, and an entropy coder 16.

The prediction mode determiner 11 is configured to determine an optimum prediction mode to be applied to a CU.

The division determiner 12 is configured to determine whether to divide a CU into a plurality of TUs. In the present embodiment, as a method of dividing a CU into a plurality of TUs, a case of 4-division is described as an example, but the division number and the division shape when dividing a CU into a plurality of TUs are not limited to such a case.

The encoding order controller 13 is configured to determine the encoding order of the TUs in the CU based on the prediction mode (for example, the direction of the prediction mode).

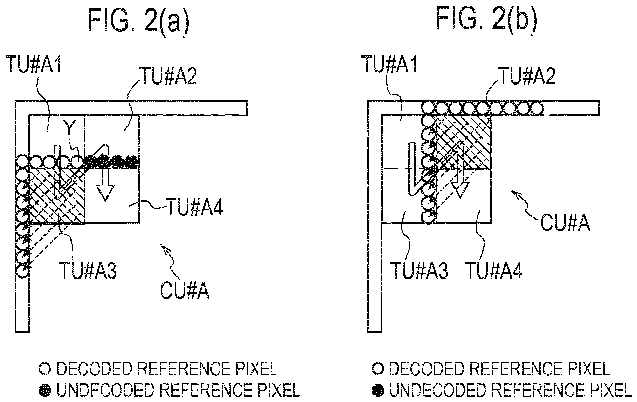

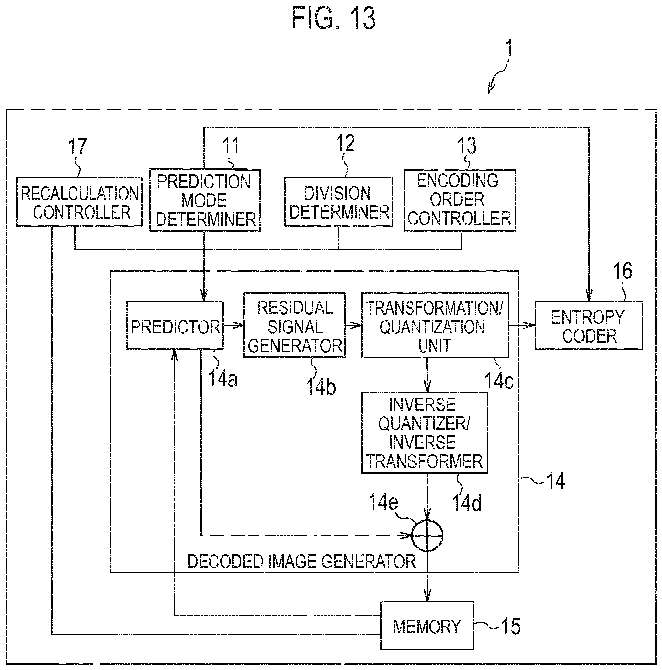

Specifically, if it is determined by the division determiner 12 to divide the CU into the plurality of TUs, as illustrated in Figs. 2(a) and 2(b), if the direction of the prediction mode determined by the prediction mode determiner 11 is the direction from the lower left to the upper right (that is, in the case where the direction prediction is performed from the lower left to the upper right), the encoding order controller 13 is configured to adopt the encoding order such as TU#A1 (TU at the upper left in CU#A) → TU#A3 (TU at the lower left in CU#A) → TU#A2 (TU at the upper right in CU#A) → TU#A4 (TU at the lower right in CU#A) as the encoding order of the TU in the CU, instead of the conventional raster scan order (Z type as illustrated in Fig. 13).

On the other hand, if it is determined by the division determiner 12 to divide the CU into the plurality of TUs, and if the direction of the prediction mode determined by the prediction mode determiner 11 is not a direction from the lower left to the upper right (that is, if direction prediction is performed from the upper right to the lower left, a case where planar is performed, a case where DC prediction is performed, or the like), the encoding order controller 13 may be configured to adopt the conventional raster scan order (Z type as illustrated in Fig. 13) as the encoding order of the TU in the CU.

According to this configuration, since it is possible to uniquely determine the encoding order determined by the encoding order controller 13 according to the direction of the prediction mode, there is no need to newly transmit a flag indicating the encoding order by the encoding device 1.

The decoded image generator 14 is configured to generate locally decoded images (decoded images for each TU) based on the encoding order determined by the encoding order controller 13 and the method of dividing the CU into TUs.

Specifically, if it is determined by the division determiner 12 to divide the CU into the plurality of TUs, the decoded image generator 14 is configured to sequentially generate the locally decoded images according to the encoding order determined by the encoding order controller 13.

As illustrated in Fig. 1, the decoded image generator 14 includes a predictor 14a, a residual signal generator 14b, a transformer/quantizer14c, an inverse quantizer/inverse transformer 14d, and a locally decoded image generator 14e.

The predictor 14a is configured to generate a predicted image by using the prediction mode determined by the prediction mode determiner 11.

Here, as illustrated in Fig. 2(a), when intra prediction of TU#A3 (lower left TU in CU#A) is performed, a reference pixel positioned in TU#A2 (upper right TU in CU#A) is not decoded. However, since the direction of the prediction mode (prediction direction) is the direction from the lower left to the upper right, it is not necessary to use a reference pixel positioned in TU#A2 (upper right TU in CU#A) when generating a predicted image. Therefore, even when the predictor 14a uses the encoding order such as TU#A1 (TU in the upper left in CU#A) → TU#A3 (TU in the lower left in CU#A) → TU#A2 (TU in the upper right in CU#A) → TU#A4 (TU of the lower right in CU#A), there is no reduction in prediction accuracy in TU#A3.

Similarly, as illustrated in Fig. 2(b), when intra prediction of TU#A2 (upper right TU in CU#A) is performed, the reference pixel positioned in TU#A3 (lower left TU in CU#A) is decoded. Therefore, when generating a predicted image, the predictor 14a can use the reference pixel positioned in TU#A3 (lower left TU in CU#A), and prediction accuracy in TU#A2 is improved.

As illustrated in Fig. 2(a), the predictor 14a is defined such that the value of the decoded reference pixel (for example, "Y" in Fig. 2 (a)) positioned closest to the undecoded reference pixel (for example, the black circle in Fig. 2(a)) is copied to the undecoded reference pixel positioned in the same column in TU#A2 (TU in the upper right in CU#A).

However, in the present embodiment, if it is determined by the division determiner 12 to divide the CU into the plurality of TUs, and if the direction of the prediction mode is the direction from the lower left to the upper right, when generating the predicted image of TU#A4 (the lower right TU in CU#A) as illustrated in Fig. 2(b), the predictor 14a does not use the undecoded reference pixels filled by the copying corresponding to the black circle in Fig. 2A, and thus it is possible to avoid deterioration in prediction accuracy and reduction in encoding efficiency.

On the other hand, if it is determined by the division determiner 12 to divide the CU into the plurality of TUs, and if the direction of the prediction mode determined by the prediction mode determiner 11 is the direction from the upper right to the lower left (that is, if the direction prediction is performed from the upper right to the lower left), the predictor 14a generates a predicted image by the conventional raster scan order (Z type as illustrated in Fig. 13).

The residual signal generator 14b is configured to generate a residual signal from a difference between the predicted image generated by the predictor 14a and the original image.

The transformer/quantizer14c is configured to perform orthogonal transformation processing and quantization processing on the residual signal generated by the residual signal generator 14b and generate quantized transformation coefficients.

The inverse quantizer/inverse transformer 14d is configured to perform inverse quantization processing and inverse orthogonal transformation processing again on the quantized transformation coefficients generated by the transformer/quantizer14c and generate a quantized residual signal.

The locally decoded image generator 14e is configured to generate the locally decoded image by adding the predicted image generated by the predictor 14a to the quantized residual signal generated by the inverse quantizer/inverse transformer 14d.

The memory 15 is configured to hold the locally decoded image generated by the decoded image generator 14 so as to be usable as a reference image.

The entropy coder 16 is configured to output a stream by performing entropy coding processing on flag information including the prediction mode or the like determined by the prediction mode determiner 11 or the quantized transformation coefficients.

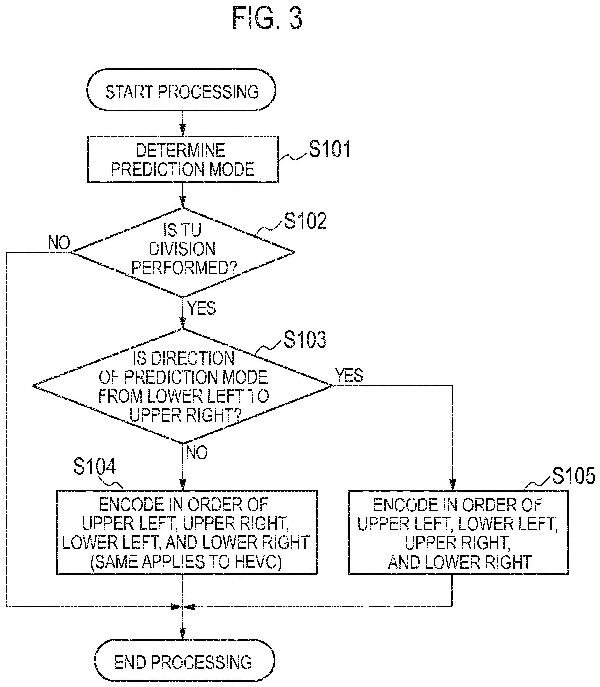

Fig. 3 illustrates a flowchart for explaining an example of the operation of determining the encoding order by the encoding device 1 according to the present embodiment.

As illustrated in Fig. 3, in step S101, the encoding device 1 determines an optimum prediction mode to be applied to the CU.

In step S102, the encoding device 1 determines whether to divide the CU into the plurality of TUs. If it is determined in step S102 to divide the CU into the plurality of TUs, the operation proceeds to step S103. On the other hand, if it is determined in step S102 that the CU is not divided into the plurality of TUs, the operation ends.

In step S103, if it is determined that the direction of the prediction mode is the direction from the lower left to the upper right (for example, in HEVC, if it is determined that the prediction mode is "2" to "9"), the operation proceeds to step S105. On the other hand, if it is determined in step S103 that the direction of the prediction mode is not the direction from the lower left to the upper right, the operation proceeds to step S104.

In step S104, the encoding device 1 performs encoding processing in the raster scan order (Z type as illustrated in Fig. 13) used in the conventional HEVC.

In step S105, the encoding device 1 performs encoding processing in the encoding order such as TU#A1 (TU at the upper left in CU#A) → TU#A3 (TU at the lower left in CU#A) → TU#A2 (TU at the upper right in CU#A) → TU#A4 (TU in the lower right of CU#A).

In addition, the decoding device 3 according to the present embodiment is configured to decode an original image of a frame unit constituting a video by dividing the original image into CUs. In addition, as in the encoding device 1 according to the present embodiment, the decoding device 3 according to the present embodiment is configured to be able to divide a CU into a plurality of TUs.

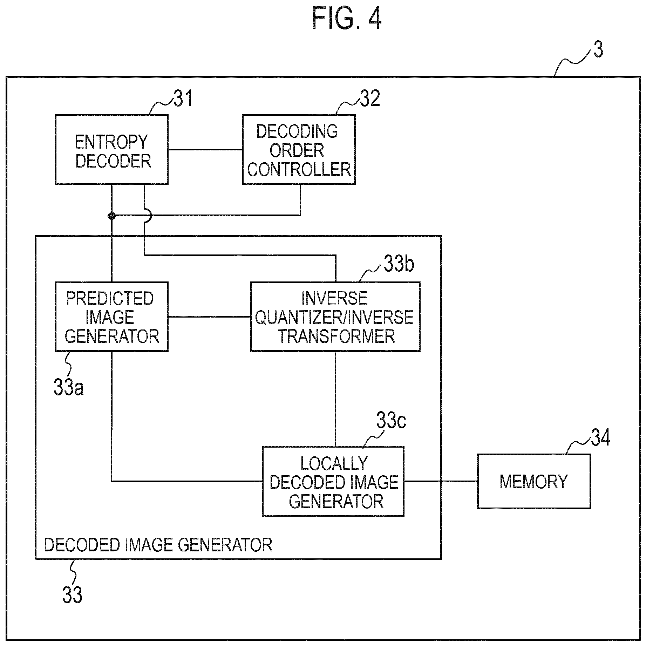

As illustrated in Fig. 4, the decoding device 3 according to the present embodiment includes an entropy decoder 31, a decoding order controller 32, a decoded image generator 33, and a memory 34.

The entropy decoder 31 is configured to decode transformation coefficients, flag information, and the like from the stream output from the encoding device 1. Here, the transformation coefficient is a quantized transformation coefficient obtained as a signal encoded by dividing an original image of a frame unit into CUs by the encoding device 1. In addition, the flag information includes accompanying information such as the prediction mode.

The decoding order controller 32 is configured to determine the decoding order of the TUs in the CU based on the prediction mode.

Specifically, the decoding order controller 32 is configured to determine the decoding order of the TUs in the CU according to the flag indicating whether the TU division output by the entropy decoder 31 has been performed (whether the CU is divided into the plurality of TUs) and the direction of the prediction mode.

More specifically, as in the encoding order controller 13, if the CU is divided into the plurality of TUs, as illustrated in Figs. 2(a) and 2(b), if the direction of the prediction mode output by the entropy decoder 31 is the direction from the lower left to the upper right (that is, if the direction prediction is performed from the lower left to the upper right), the decoding order controller 32 is configured to adopt the encoding order such as TU#A1 (TU at the upper left in CU#A) → TU#A3 (TU at the lower left in CU#A) → TU#A2 (TU at the upper right in CU#A) → TU#A4 (TU at the lower right in CU#A) as the decoding order of the TU in the CU, instead of the conventional raster scan order (Z type as illustrated in Fig. 13).

On the other hand, if the CU is divided into the plurality of TUs, and if the direction of the prediction mode output by the entropy decoder 31 is not the direction from the lower left to the upper right (that is, if the direction prediction is performed from the upper right to the lower left, planar is performed, or DC prediction is performed), the decoding order controller 32 may be configured to adopt the conventional raster scan order (Z type as illustrated in Fig. 13) as the decoding order of the TU in the CU.

According to this configuration, it is unnecessary to uniquely determine the decoding order determined by the decoding order controller 32 according to the direction of the prediction mode, so that there is no need to newly receive the flag indicating the decoding order in the decoding device 3.

The decoded image generator 33 is configured to generate locally decoded images (decoded images for each TU) based on the decoding order determined by the decoding order controller 32 and the method of dividing the CU into the TUs.

Specifically, if the CU is divided into the plurality of TUs, the decoded image generator 33 is configured to generate the locally decoded image by sequentially performing intra prediction, inverse quantization processing, and inverse orthogonal transformation processing on the quantized transformation coefficients output by the entropy decoder 31 according to the decoding order determined by the decoding order controller 32.

As illustrated in Fig. 4, the decoded image generator 33 includes a predicted image generator 33a, an inverse quantizer/inverse transformer 33b, and a locally decoded image generator 33c.

The predicted image generator 33a may be configured to generate the predicted image by using the prediction mode output by the entropy decoder 31 according to the decoding order determined by the decoding order controller 32.

Specifically, as in the predictor 14a, if the CU is divided into the plurality of TUs, as illustrated in Figs. 2(a) and 2(b), if the prediction mode direction (prediction direction) is the direction from the lower left to the upper right, the predicted image generator 33a may be configured to adopt the decoding order such as TU#A1 (TU at the upper left in CU#A) → TU#A3 (TU at the lower left in CU#A) → TU#A2 (TU at the upper right in CU#A) → TU#A4 (TU at the lower right of CU#A).

In addition, as in the predictor 14a, an a case where the CU is divided into the plurality of TUs, and if the direction of the prediction mode determined by the prediction mode determiner 11 is not the direction from the lower left to the upper right (that is, if direction prediction is performed from the upper right to the lower left, planar is performed, or DC prediction is performed), the predicted image generator 33a may be configured to generate a predicted image by a conventional raster scan order (Z type as illustrated in Fig. 13).

The inverse quantizer/inverse transformer 33b is configured to generate a residual signal by performing inverse quantization processing and inverse transformation processing (for example, inverse orthogonal transformation processing) on the quantized transformation coefficients output by the entropy decoder 31.

The locally decoded image generator 33c is configured to generate a locally decoded image by adding the predicted image generated by the predicted image generator 33a and the residual signal generated by the inverse quantizer/inverse transformer 33b.

The memory 34 is configured to hold the locally decoded image generated by the decoded image generator 33 so as to be usable as a reference image for intra prediction and inter prediction.

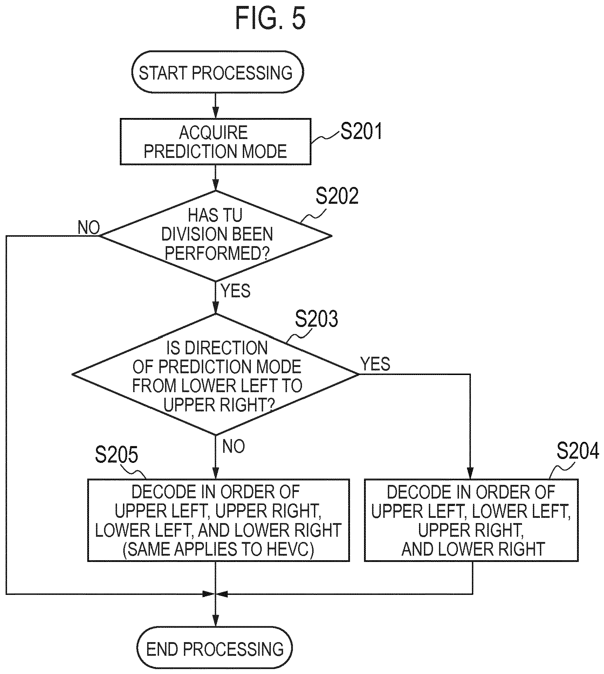

Fig. 5 illustrates a flowchart for explaining an example of the operation of determining the decoding order by the decoding device 3 according to the present embodiment.

As illustrated in Fig. 5, in step S201, the decoding device 3 acquires the prediction mode from the stream output from the encoding device 1.

In step S202, the decoding device 3 determines whether the CU is divided into the plurality of TUs based on the flag information included in the stream output from the encoding device 1. In step S202, if it is determined that the CU is divided into the plurality of TUs, the operation proceeds to step S203. On the other hand, if it is determined in step S202 that the CU is not divided into the plurality of TUs, the operation is ended.

In step S203, the decoding device 3 determines whether the direction of the prediction mode is the direction from the lower left to the upper right (in the case of HEVC, for example, whether the prediction mode is "2" to "9"). If it is determined in step S203 that the direction of the prediction mode is not the direction from the lower left to the upper right, the operation proceeds to step S205. On the other hand, if it is determined in step S203 that the direction of the prediction mode is the direction from the lower left to the upper right, the operation proceeds to step S204.

In step S204, the decoding device 3 performs decoding processing in the decoding order such as TU#A1 (TU at the upper left in CU#A) → TU#A3 (TU at the lower left in CU#A) → TU#A2 (TU at the upper right in CU#A) → TU#A4 (TU at the lower right of CU#A).

In step S205, the decoding device 3 performs decoding processing in the conventional raster scan order (Z type as illustrated in Fig. 13) used in the HEVC.

According to the encoding device 1 and the decoding device 3 according to the present embodiment, if the CU is divided into the plurality of TUs, it is possible to uniquely determine the encoding order and the decoding order of the TU according to the direction of the prediction mode (prediction direction). Therefore, it is possible to reduce deterioration in prediction accuracy due to prediction based on undecoded reference pixels.

In addition, according to the encoding device 1 and the decoding device 3 according to the present embodiment, since the intra prediction processing procedure itself in the existing HEVC is not changed, it is possible to share the processing procedure of intra prediction with the existing HEVC.

### (Second Embodiment)

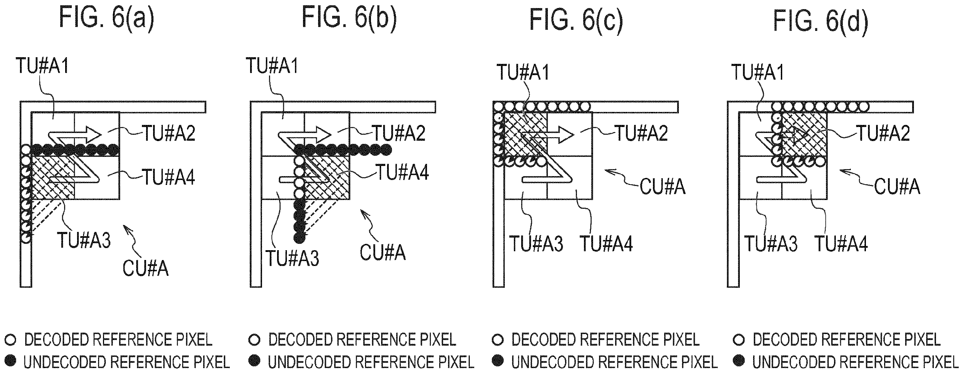

Hereinafter, referring to Figs. 6 to 8, an encoding device 1 and a decoding device 3 according to a second embodiment of the present invention will be described, focusing on the difference from the encoding device 1 and the decoding device 3 according to the first embodiment.

In the encoding device 1 according to the present embodiment, if it is determined by the division determiner 12 to divide a CU into a plurality of TUs, as illustrated in Figs. 6(a) to 6(d), if the direction of the prediction mode determined by the prediction mode determiner 11 is the direction from the lower left to the upper right (that is, if the direction prediction is performed from the lower left to the upper right), the encoding order controller 13 may adopt a predefined encoding order between the encoding order of TU#A3 (lower left TU in CU#A) → TU#A4 (lower right TU in CU#A) → TU#A1 (upper left TU in CU#A) → TU#A2 (upper right TU in CU#A), and the encoding order of TU#A3 (lower left TU in CU#A) → TU#A1 (upper left TU in CU#A) → TU#A4 (lower right TU in CU#A) → TU#A2 (upper right TU in CU#A TU), as the encoding order of the TU in the CU, instead of the conventional raster scan order (Z type as illustrated in Fig. 13).

In addition, in the encoding device 1 according to the present embodiment, if it is determined by the division determiner 12 to divide the CU into the plurality of TUs, and if the direction of the prediction mode determined by the prediction mode determiner 11 is the direction from the upper right to the lower left (that is, if the direction prediction is performed from the upper right to the lower left), the encoding order controller 13 may adopt a predefined encoding order between the encoding order of TU#A2 (upper right TU in CU#A) → TU # A 4 (lower right TU in CU#A) → TU # A 1 (upper left TU in CU#A) → TU # A 3 (lower left TU in CU#A), and the encoding order of TU#A2 (upper right TU in CU#A) → TU#A1 (upper left TU in CU#A) → TU#A4 (lower right TU in CU#A) → TU#A3 (lower left TU in CU#A), Instead of the conventional raster scan order (Z type as illustrated in Fig. 13).

In addition, in the encoding device 1 according to the present embodiment, if it is determined by the division determiner 12 to divide the CU into the plurality of TUs, as illustrated in Figs. 6(a) to 6(d), if the prediction mode direction (prediction direction) is the direction from the lower left to the upper right, the predictor 14a may be configured to generate a predicted image in a predetermined encoding order between the encoding order of TU#A3 (lower left TU in CU#A) → TU#A4 (lower right TU in CU#A) → TU#A1 (upper left TU in CU#A) → TU#A2 (upper right TU in CU#A), and the encoding order of TU#A3 (lower left TU in CU#A) → TU#A1 (upper left TU in CU#A) → TU#A4 (lower right TU in CU#A) → TU#A2 (upper right TU in CU#A).

In such a case, since all the reference pixels (reference pixels positioned in the TU on the left side of TU#A3) of TU#A3 (lower left TU in CU#A) have been decoded, the predicted image of TU#A3 (lower left TU in CU#A) does not depend on the decoding result of the pixel positioned in TU#A1 (upper left TU in CU#A).

On the other hand, the decoded image of TU#A3 (lower left TU in CU#A) is generated before TU#A1 (upper left TU in CU#A), the decoded reference pixels closer to the position can be used and the prediction accuracy is further improved when the predicted image of TU#A1 (upper left TU in CU#A) is generated, as compared with the case where the encoding processing in the conventional raster scan order is performed.

Similarly, since the decoded image of TU#A4 (lower right TU in CU#A) is generated before TU#A2 (upper right TU in CU#A), the decoded reference pixels closer to the position can be used and the prediction accuracy is further improved, as compared with the case where the encoding processing in the conventional raster scan order is performed.

Here, as illustrated in Figs. 6(c) and 6(d), the predictor 14a may be configured to set decoded reference pixels neighboring on the left side and the lower side as the reference pixel used for generating a predicted image with respect to TU#A1 (upper left TU in CU#A) and TU#A2 (upper right TU in CU#A) where the neighboring lower reference pixels are decoded.

In addition, in the encoding device 1 according to the present embodiment, if it is determined by the division determiner 12 to divide the CU into the plurality of TUs, and if the direction of the prediction mode (prediction direction) is the direction from the upper right to the lower left, the predictor 14a may be configured to generate a predicted image in a predetermined encoding order between the encoding order of TU#A2 (upper right TU in CU#A) → TU#A4 (lower right TU in CU#A) → TU#A1 (upper left TU in CU#A) → TU#A3 (lower left TU in CU#A), and the encoding order of TU#A2 (upper right TU in CU#A) → TU#A1 (upper left TU in CU#A) → TU#A4 (lower right TU in CU#A) → TU#A3 (lower left TU in CU#A).

In such a case, since all the reference pixels (reference pixels positioned in the TU on the left side of TU#A3) of TU#A3 (lower left TU in CU#A) have been decoded, the predicted image of TU#A3 (lower left TU in CU#A) does not depend on the decoding result of the pixel positioned in TU#A1 (upper left TU in CU#A).

Here, the predictor 14a may be configured to set decoded reference pixels neighboring on the upper side and the right side as the reference pixel used for generating a predicted image with respect to TU#A1 (upper left TU in CU#A) and TU#A3 (lower left TU in CU#A) wherein the neighboring right reference pixels are decoded.

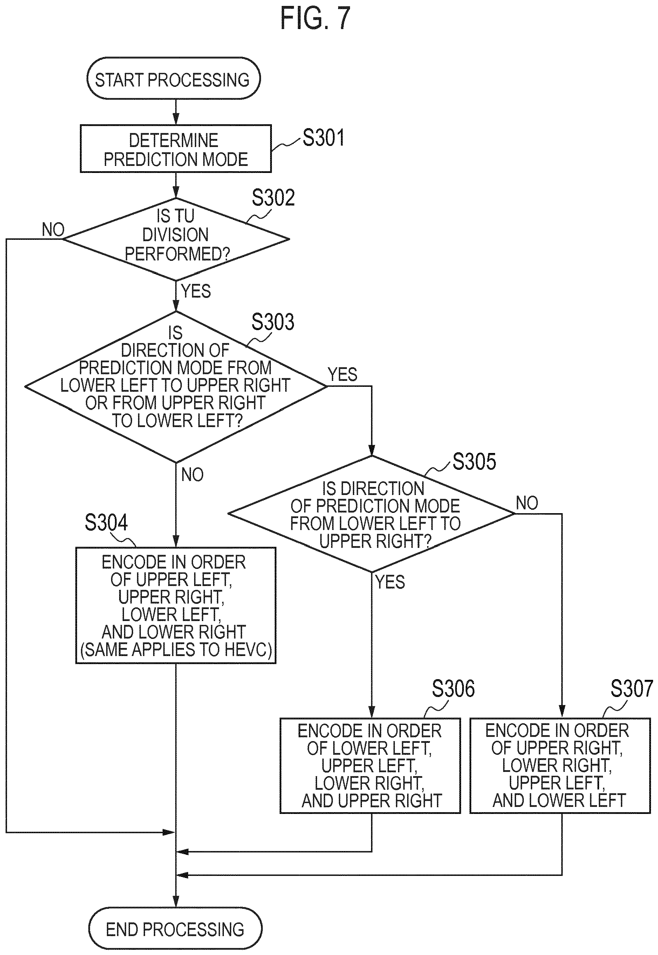

Fig. 7 illustrates a flowchart for explaining an example of the operation of determining the encoding order by the encoding device 1 according to the present embodiment.

As illustrated in Fig. 7, in step S301, the encoding device 1 determines an optimum prediction mode to be applied to the CU.

In step S302, the encoding device 1 determines whether to divide the CU into the plurality of TUs. If it is determined in step S102 to divide the CU into the plurality of TUs, the operation proceeds to step S303. On the other hand, if it is determined in step S302 that the CU is not divided into the plurality of TUs, the operation ends.

If it is determined in step S303 that the direction of the prediction mode is the direction from the lower left to the upper right or the direction from the upper right to the lower left, the operation proceeds to step S305. On the other hand, if it is determined in step S303 that the direction of the prediction mode is other than the direction from the lower left to the upper right and the direction from the upper right to the lower left, the operation proceeds to step S304.

In step S304, the encoding device 1 performs encoding processing in the raster scan order (Z type as illustrated in Fig. 13) used in the conventional HEVC.

If it is determined that the direction of the prediction mode is the direction from the lower left to the upper right (step S305), in step S306, the encoding device 1 performs encoding processing in a predetermined encoding order between the encoding order of TU#A3 (lower left TU in CU#A) → TU#A4 (lower right TU in CU#A) → TU#A1 (upper left TU in CU#A) → TU#A2 (upper right TU in CU#A), and the encoding order of TU#A3 (lower left TU in CU#A) → TU#A1 (upper left TU in CU#A) → TU#A4 (lower right TU in CU#A) → TU#A2 (upper right TU in CU#A).

On the other hand, if it is determined that the direction of the prediction mode is not the direction from the lower left to the upper right (step S305), in step S307, the encoding device 1 performs encoding processing in a predetermined encoding order between the encoding order of TU#A2 (upper right TU in CU#A) → TU#A4 (lower right TU in CU#A) → TU#A1 (upper left TU in CU#A) → TU#A3 (lower left TU in CU#A), and the encoding order of TU#A2 (upper right TU in CU#A) → TU#A1 (upper left TU in CU#A) → TU#A4 (lower right TU in CU#A) → TU#A3 (lower left TU in CU#A).

In addition, in the decoding device 3 according to the present embodiment, as in the encoding order controller 13, if the CU is divided into the plurality of TUs, and if the direction of the prediction mode is the direction from the lower left to the upper right, the decoding order controller 32 may be configured to perform decoding processing in a predetermined decoding order between the decoding order of TU#A3 (lower left TU in CU#A) → TU#A4 (lower right TU in CU#A) → TU#A1 (upper left TU in CU#A) → TU#A2 (upper right TU in CU#A), and the decoding order of TU#A3 (lower left TU in CU#A) → TU#A1 (upper left TU in CU#A) → TU#A4 (lower right TU in CU#A) → TU#A2 (upper right TU in CU#A).

In addition, in the decoding device 3 according to the present embodiment, as in the encoding order controller 13, if the CU is divided into the plurality of TUs, and if the direction of the prediction mode is the direction from the upper right to the lower left, the decoding order controller 32 may be configured to perform decoding processing in a predetermined decoding order between the decoding order of TU#A2 (upper right TU in CU#A) → TU#A4 (lower right TU in CU#A) → TU#A1 (upper left TU in CU#A) → TU#A3 (lower left TU in CU#A), and the decoding order of TU#A2 (upper right TU in CU#A) → TU#A1 (upper left TU in CU#A) → TU#A4 (lower left TU in CU#A) → TU#A3 (lower left TU in CU#A).

In addition, in the decoding device 3 according to the present embodiment, if the CU is divided into the plurality of TUs, and if the direction of the prediction mode is the direction from the lower left to the upper right, the predicted image generator 33a may be configured to generate a predicted image in a predetermined decoding order between the decoding order of TU#A3 (lower left TU in CU#A) → TU#A4 (lower right TU in CU#A) → TU#A1 (upper left TU in CU#A) → TU#A2 (upper right TU in CU#A), and the decoding order of TU#A3 (lower left TU in CU#A) → TU#A1 (upper left TU in CU#A) → TU#A4 (lower right TU in CU#A) → TU#A2 (upper right TU in CU#A).

Here, as illustrated in Figs. 6(c) and 6(d), the predicted image generator 33a may be configured to set decoded reference pixels neighboring on the left side and the lower side as the reference pixel used for generating a predicted image with respect to TU#A1 (upper left TU in CU#A) and TU#A2 (upper right TU in CU#A) where the neighboring lower reference pixels are decoded.

In addition, in the decoding device 3 according to the present embodiment, if the CU is divided into the plurality of TUs, and if the direction of the prediction mode (prediction direction) is the direction from the upper right to the lower left, the predicted image generator 33a may be configured to generate a predicted image in a predetermined decoding order between the decoding order of TU#A2 (upper right TU in CU#A) → TU#A4 (lower right TU in CU#A) → TU#A1 (upper left TU in CU#A) → TU#A3 (lower left TU in CU#A), and the decoding order of TU#A2 (upper right TU in CU#A) → TU#A1 (upper left TU in CU#A) → TU#A4 (lower right TU in CU#A) → TU#A3 (lower left TU in CU#A).

Here, the predicted image generator 33a may be configured to set decoded reference pixels neighboring on the upper side and the right side as the reference pixel used for generating a predicted image with respect to TU#A1 (upper left TU in CU#A) and TU#A3 (lower left TU in CU#A) wherein the neighboring right reference pixels are decoded.

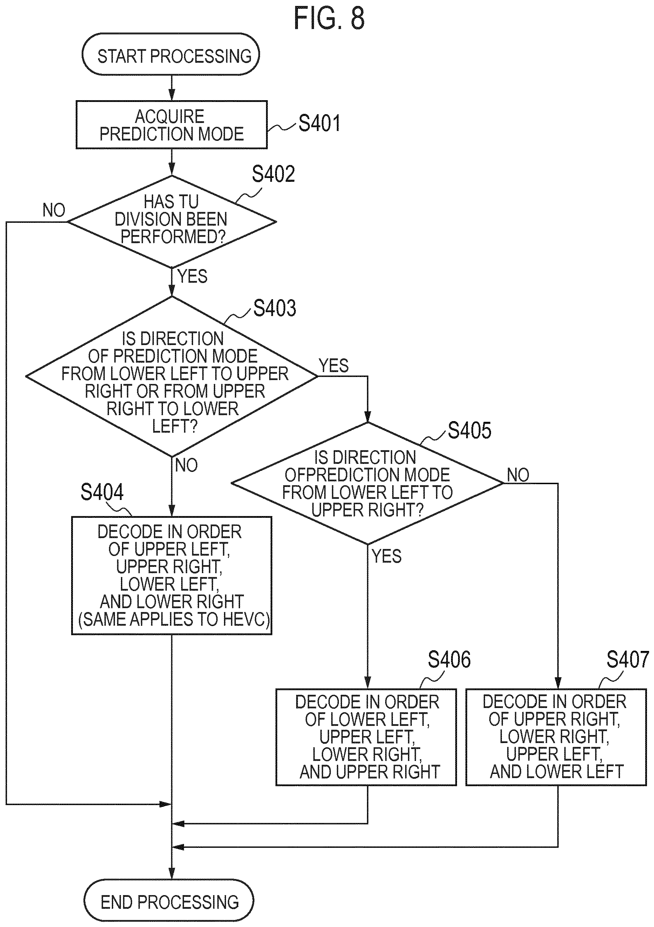

Fig. 8 illustrates a flowchart for explaining an example of the operation of determining the decoding order by the decoding device 3 according to the present embodiment.

As illustrated in Fig. 8, in step S401, the decoding device 3 acquires the prediction mode from the stream output from the encoding device 1.

In step S402, the decoding device 3 determines whether the CU is divided into the plurality of TUs based on the flag information included in the stream output from the encoding device 1. In step S402, if it is determined that the CU is divided into the plurality of TUs, the operation proceeds to step S403. On the other hand, if it is determined in step S402 that the CU is not divided into the plurality of TUs, the operation is ended.

In step S403, the decoding device 3 determines whether the direction of the prediction mode is the direction from the lower left to the upper right or the direction from the upper right to the lower left. If it is determined in step S403 that the direction of the prediction mode is the direction from the lower left to the upper right or the direction from the upper right to the lower left, the operation proceeds to step S405. On the other hand, if it is determined in step S403 that the direction of the prediction mode is other than the direction from the lower left to the upper right and the direction from the upper right to the lower left, the operation proceeds to step S404.

In step S404, the decoding device 3 performs decoding processing in the conventional raster scan order (Z type as illustrated in Fig. 13) used in the HEVC.

If it is determined that the direction of the prediction mode is the direction from the lower left to the upper right (step S405), in step S406, the decoding device 3 performs decoding processing in a predetermined decoding order between the decoding order of TU#A3 (lower left TU in CU#A) → TU#A4 (lower right TU in CU#A) → TU#A1 (upper left TU in CU#A) → TU#A2 (upper right TU in CU#A), and the decoding order of TU#A3 (lower left TU in CU#A) → TU#A1 (upper left TU in CU#A) → TU#A4 (lower right TU in CU#A) → TU#A2 (upper right TU in CU#A).

On the other hand, if it is determined that the direction of the prediction mode is not the direction from the lower left to the upper right (step S405), in step S407, the decoding device 3 performs decoding processing in a predetermined decoding order between the decoding order of TU#A2 (upper right TU in CU#A) → TU#A4 (lower right TU in CU#A) → TU#A1 (upper left TU in CU#A) → TU#A3 (lower left TU in CU#A), and the decoding order of TU#A2 (upper right TU in CU#A) → TU#A1 (upper left TU in CU#A) → TU#A4 (lower right TU in CU#A) → TU#A3 (lower left TU in CU#A).

According to the encoding device 1 and the decoding device 3 according to the present embodiment, when the CU is divided into the plurality of TUs, more accurate intra prediction can be performed according to the direction of the prediction mode (prediction direction).

### (Third Embodiment)

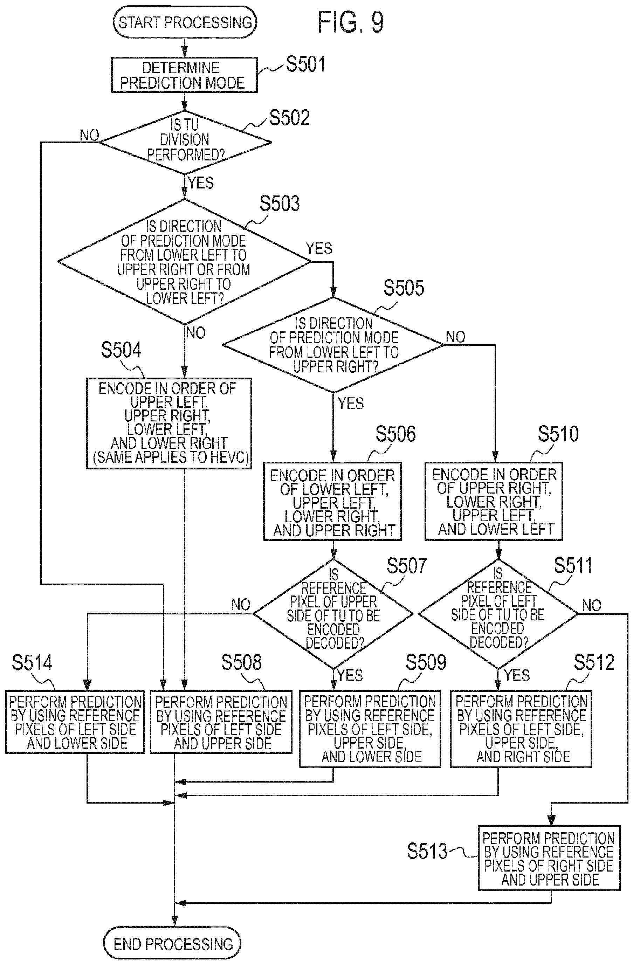

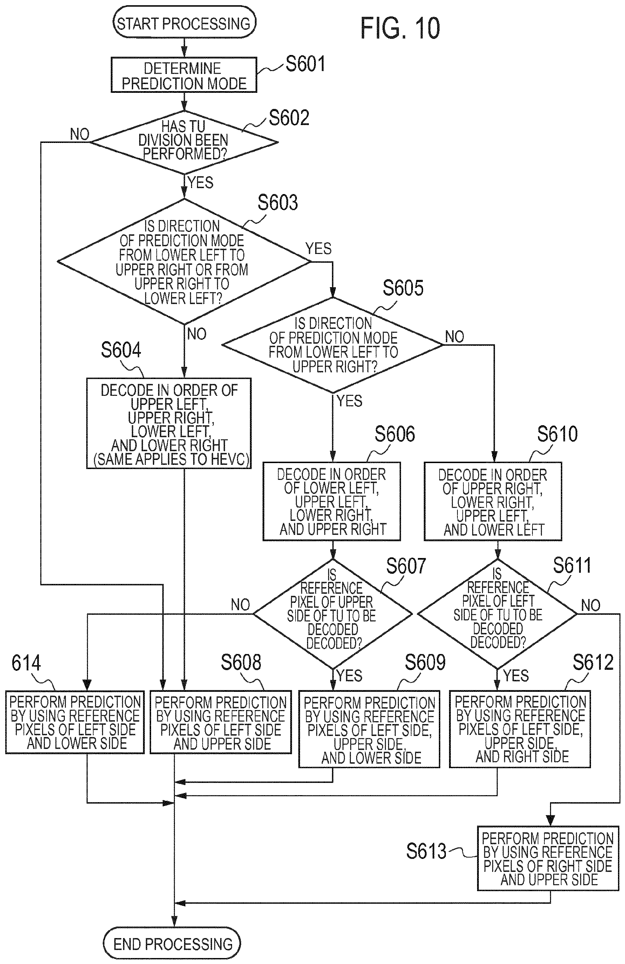

Hereinafter, referring to Figs. 9 and 10, an encoding device 1 and a decoding device 3 according to a third embodiment of the present invention will be described, focusing on the difference from the encoding device 1 and the decoding device 3 according to the second embodiment.

In the encoding device 1 according to the present embodiment, if a predefined encoding order different from a conventional raster scan order is used according to a direction of a prediction mode, and if all the reference pixels neighboring to the left side, the upper side, or the right side of the TU to be encoded or all the reference pixels neighboring to the left side, the upper side, or the lower side of the TU to be encoded are already decoded, the predictor 14a may be configured to perform intra prediction by changing to another predefined prediction such as linear interpolation using all available reference pixels.

For example, in the example of Fig. 6, since the direction of the prediction mode is the direction from the lower left to the upper right, the predictor 14a is configured to perform encoding processing in an encoding order such as TU#A3 (lower left TU in CU#A) → TU#A4 (lower right TU in CU#A) → TU#A1 (upper left TU in CU#A) → TU#A2 (upper right TU in CU#A), but regarding the direction of the prediction mode, a common direction is used regardless of the position of the divided TU.

However, as illustrated in Figs. 6(c) and 6(d), reference pixels neighboring to TU#A1 (upper left TU in CU#A) and TU#A2 (upper right TU in CU#A) are decoded except for reference pixels neighboring to the right side of TU#A1 (upper left TU in CU#A) and TU#A2 (upper right TU in CU#A).

Therefore, in the encoding device 1 according to the present embodiment, when the encoding order of TU#A3 (lower left TU in CU#A) → TU#A4 (lower right TU in CU#A) → TU#A1 (upper left TU in CU#A) → TU#A2 (upper right TU in CU#A) or the encoding order of TU#A3 (lower left TU in CU#A) → TU#A1 (upper left TU in CU#A) → TU#A4 (lower right TU in CU#A) → TU#A2 (upper right TU in CU#A) is used, the predictor 14a may be configured to perform predefined prediction such as linear interpolation using decoded reference pixels neighboring to the left side, upper side, or lower side of the TU with respect to the TU in which reference pixels neighboring to the upper side is decoded (TU positioned at the uppermost position among the divided TU groups, TU#A1 and TU#A2 in the example of Fig. 6), instead of a common intra prediction direction in CU#A.

Fig. 9 illustrates a flowchart for explaining an example of the operation of determining the encoding order by the encoding device 1 according to the present embodiment.

As illustrated in Fig. 9, in step S501, the encoding device 1 determines an optimum prediction mode to be applied to the CU.

In step S502, the encoding device 1 determines whether to divide the CU into the plurality of TUs. If it is determined in step S502 to divide the CU into the plurality of TUs, the operation proceeds to step S503. On the other hand, if it is determined in step S502 that the CU is not divided into the plurality of TUs, the operation proceeds to step S508.

If it is determined in step S503 that the direction of the prediction mode is the direction from the lower left to the upper right or the direction from the upper right to the lower left, the operation proceeds to step S505. On the other hand, if it is determined in step S503 that the direction of the prediction mode is other than the direction from the lower left to the upper right and the direction from the upper right to the lower left, the operation proceeds to step S504.

In step S504, the encoding device 1 adopts the raster scan order (Z type as illustrated in Fig. 13) used in the conventional HEVC as the encoding order described above.

In step S508, the encoding device 1 performs predefined prediction on the TU to be encoded by using the decoded reference pixels neighboring on the left and upper sides of the TU.

If it is determined that the direction of the prediction mode is the direction from the lower left to the upper right (step S505), in step S506, the encoding device 1 adopts, as the encoding order, a predefined encoding order between the encoding order of TU#A3 (lower left TU in CU#A) → TU#A4 (lower right TU in CU#A) → TU#A1 (upper left TU in CU#A) → TU#A2 (upper right TU in CU#A), and the encoding order of TU#A3 (lower left TU in CU#A) → TU#A1 (upper left TU in CU#A) → TU#A4 (lower right TU in CU#A) → TU#A2 (upper right TU in CU#A).

On the other hand, if it is determined that the direction of the prediction mode is not the direction from the lower left to the upper right (step S505), in step S510, the encoding device 1 adopts, as the encoding order, a predefined encoding order between the encoding order of TU#A2 (upper right TU in CU#A) → TU#A4 (lower right TU in CU#A) → TU#A1 (upper left TU in CU#A) → TU#A3 (lower left TU in CU#A), and the encoding order of TU#A2 (upper right TU in CU#A) → TU#A1 (upper left TU in CU#A) → TU#A4 (lower right TU in CU#A) → TU#A3 (lower left TU in CU#A).

In step S507, the encoding device 1 determines whether the reference pixel neighboring to the upper side of the TU to be encoded has been decoded. In step S507, if decoded, the operation proceeds to step S509, and if not decoded, the operation proceeds to step S514.

In step S509, the encoding device 1 performs predefined prediction on the TU to be encoded by using the decoded reference pixels neighboring on the left, upper, and lower sides of the TU.

In step S514, the encoding device 1 performs predefined prediction on the TU to be encoded by using the decoded reference pixels neighboring on the left and lower sides of the TU.

In step S511, the encoding device 1 determines whether the reference pixel neighboring to the left side of the TU to be encoded has been decoded. In step S511, if decoded, the operation proceeds to step S512, and if not decoded, the operation proceeds to step S513.

In step S512, the encoding device 1 performs predefined prediction on the TU to be encoded by using the decoded reference pixels neighboring on the left, upper, and right sides of the TU.

In step S513, the encoding device 1 performs predefined prediction on the TU to be encoded by using the decoded reference pixels neighboring on the right and upper sides of the TU.

In the decoding device 3 according to the present embodiment, if a predefined decoding order different from a conventional raster scan order is used according to a direction of a prediction mode, and if all the reference pixels neighboring to the left side, the upper side, or the right side of the TU to be decoded or all the reference pixels neighboring to the left side, the upper side, or the lower side of the TU to be encoded are already decoded, the predicted image generator 33a may be configured to perform intra prediction by changing to another predefined prediction such as linear interpolation using all available reference pixels.

Fig. 10 illustrates a flowchart for explaining an example of the operation of determining the decoding order by the decoding device 3 according to the present embodiment.

As illustrated in Fig. 10, in step S601, the decoding device 3 acquires the prediction mode from the stream output from the encoding device 1.

In step S602, the decoding device 3 determines whether the CU is divided into the plurality of TUs based on the flag information included in the stream output from the encoding device 1. In step S602, if it is determined that the CU is divided into the plurality of TUs, the operation proceeds to step S603. On the other hand, in step S602, if it is determined that the CU is not divided into the plurality of TUs, the operation proceeds to step S608.

In step S608, the decoding device 3 performs predefined prediction on the TU to be decoded by using the decoded reference pixels neighboring on the left and upper sides of the TU.

In step S603, the decoding device 3 determines whether the direction of the prediction mode is the direction from the lower left to the upper right or the direction from the upper right to the lower left. If it is determined in step S603 that the direction of the prediction mode is the direction from the lower left to the upper right or the direction from the upper right to the lower left, the operation proceeds to step S605. On the other hand, if it is determined in step S603 that the direction of the prediction mode is other than the direction from the lower left to the upper right and the direction from the upper right to the lower left, the operation proceeds to step S604.

In step S604, the decoding device 3 adopts the raster scan order (Z type as illustrated in Fig. 13) used in the conventional HEVC as the decoding order described above.

If it is determined that the direction of the prediction mode is the direction from the lower left to the upper right (step S605), in step S606, the decoding device 3 adopts, as the decoding order, a predefined decoding order between the decoding order of TU#A3 (lower left TU in CU#A) → TU#A4 (lower right TU in CU#A) → TU#A1 (upper left TU in CU#A) → TU#A2 (upper right TU in CU#A), and the decoding order of TU#A3 (lower left TU in CU#A) → TU#A1 (upper left TU in CU#A) → TU#A4 (lower right TU in CU#A) → TU#A2 (upper right TU in CU#A).

On the other hand, if it is determined that the direction of the prediction mode is not the direction from the lower left to the upper right (step S605), in step S610, the decoding device 3 adopts, as the decoding order, a predefined decoding order between the decoding order of TU#A2 (upper right TU in CU#A) → TU#A4 (lower right TU in CU#A) → TU#A1 (upper left TU in CU#A) → TU#A3 (lower left TU in CU#A), and the decoding order of TU#A2 (upper right TU in CU#A) → TU#A1 (upper left TU in CU#A) → TU#A4 (lower right TU in CU#A) → TU#A3 (lower left TU in CU#A).

In step S607, the decoding device 3 determines whether the reference pixel neighboring to the upper side of the TU to be decoded has been decoded. In step S607, if decoded, the operation proceeds to step S609, and if not decoded, the operation proceeds to step S614.

In step S609, the decoding device 3 performs predefined prediction on the TU to be decoded by using the decoded reference pixels neighboring on the left, upper, and lower sides of the TU.

In step S614, the decoding device 3 performs predefined prediction on the TU to be decoded by using the decoded reference pixels neighboring on the left and lower sides of the TU.

In step S611, the decoding device 3 determines whether the reference pixel neighboring to the left side of the TU to be decoded has been decoded. In step S611, if decoded, the operation proceeds to step S612, and if not decoded, the operation proceeds to step S613.

In step S612, the decoding device 3 performs predefined prediction on the TU to be decoded by using the decoded reference pixels neighboring on the left, upper, and right sides of the TU.

In step S613, the decoding device 3 performs predefined prediction on the TU to be decoded by using the decoded reference pixels neighboring on the right and upper sides of the TU.

According to the encoding device 1 and the decoding device 3 according to the present embodiment, since it is possible to switch the prediction mode itself applied to the TU to be encoded (or to be decoded) according to the direction of the prediction mode and the position of the TU to be encoded (or to be decoded), that is, the position and direction of available reference pixels, the prediction accuracy can be further improved.

### (Fourth Embodiment)

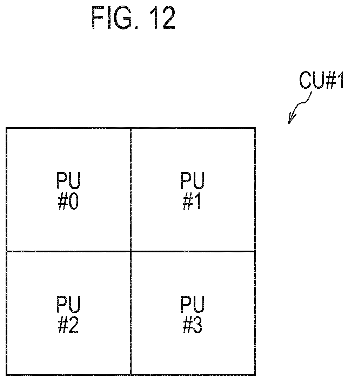

Hereinafter, an encoding device 1 and a decoding device 3 according to a fourth embodiment of the present invention will be described with reference to Figs. 12 to 20. Here, the encoding device 1 and the decoding device 3 according to the present embodiment are configured to correspond to intra prediction in a video encoding method such as H.265/HEVC. The encoding device 1 and the decoding device 3 according to the present embodiment are configured so as to correspond to arbitrary video encoding methods as long as they are a video encoding method that performs intra prediction.

The encoding device 1 according to the present embodiment is configured to encode an original image of a frame unit constituting a video by dividing the original image into encoding target blocks. Hereinafter, in the present embodiment, a case where "CU" used in the current H.265/HEVC is used as the encoding target block will be described as an example, the present invention is not limited to such a case and can also be applied to a case where an encoding target block of another name is used.

In addition, the encoding device 1 according to the present embodiment is configured to be able to divide a coding target block into a plurality of blocks. Here, it is assumed that a prediction mode is assigned to each of such blocks. Hereinafter, in the present embodiment, a case where "PU" used in the current H.265/HEVC is used as such a block will be described as an example, the present invention is not limited to such a case and can also be applied to a case where a block of another name is used.

Hereinafter, in the present embodiment, as illustrated in Fig. 12, a case where CU#1 is divided into PU#0 to PU#3 will be described as an example.

In addition, in the present embodiment, in a CU in which there is no neighboring decoded reference pixel such as a CU positioned at the top left in a frame, a reference pixel to be used for generating a predicted image is created by filling a predetermined value (for example, "512" in the case of a 10-bit video). Therefore, it is assumed that all the pixels neighboring to the left side of the CU to be encoded can be used as reference pixels.

As illustrated in Fig. 13, the encoding device 1 according to the present embodiment includes a prediction mode determiner 11, a division determiner 12, an encoding order controller 13, a decoded image generator 14, a memory 15, an entropy coder 16, and a recalculation controller 17.

The prediction mode determiner 11 is configured to determine an appropriate prediction mode to be applied to the CU and the PU.

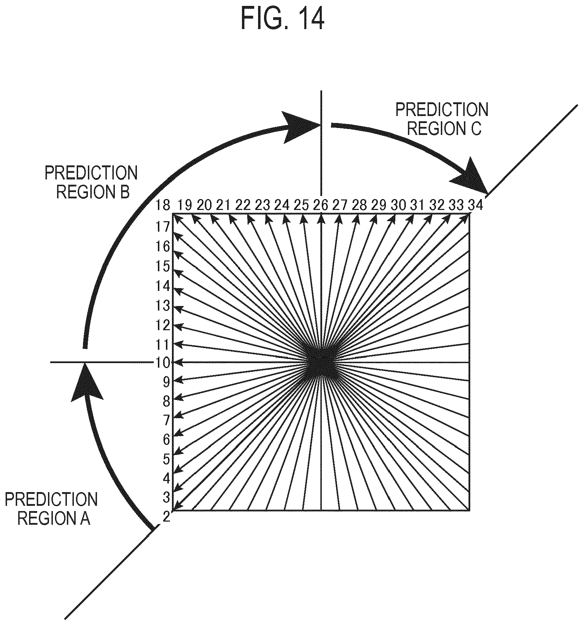

For example, as illustrated in Fig. 14, in the current H.265/HEVC, a prediction mode takes one of values from "0" to "34", a prediction mode 0 corresponds to planar prediction, and a prediction mode 1 corresponds to DC prediction.

In the present embodiment, the prediction mode is divided into three regions. Prediction modes 2 to 9 belong to a prediction region A, prediction modes 0, 1, and 10 to 26 belong to a prediction region B, and prediction modes 27 to 34 belong to a prediction region C.

That is, if there is the reference pixel on the lower left side from the center of the CU and the PU (if the prediction direction is the lower left), the prediction mode belongs to the prediction region A. If there is the reference pixel on the upper right side from the center of the CU and the PU (if the prediction direction is the upper right), the prediction mode belongs to the prediction region C. In other cases, the prediction mode belongs to the prediction region B.

The present invention can also be applied to a case where the number of prediction modes is greater than "35" in the current H.265/HEVC.

The division determiner 12 is configured to determine whether to divide the CU (in this embodiment, CU#1) into a plurality of PUs (in the present embodiment, PU#0 to PU#3). In the present embodiment, as a method of dividing a CU into a plurality of PUs, a case of 4-division is described as an example, but the division number and the division shape when dividing a CU into a plurality of PUs are not limited to such a case.

If it is determined by the division determiner 12 to divide the CU (in this embodiment, CU#1) into a plurality of PUs (in the present embodiment, PU#0 to PU#3), the encoding order controller 13 determines the encoding order of the PUs based on a combination of prediction modes in each of the PUs determined by the prediction mode determiner 11.

Here, the encoding order controller 13 may be configured to determine the encoding order of the PUs so as to use the largest number of decoded reference pixels when generating the predicted image.

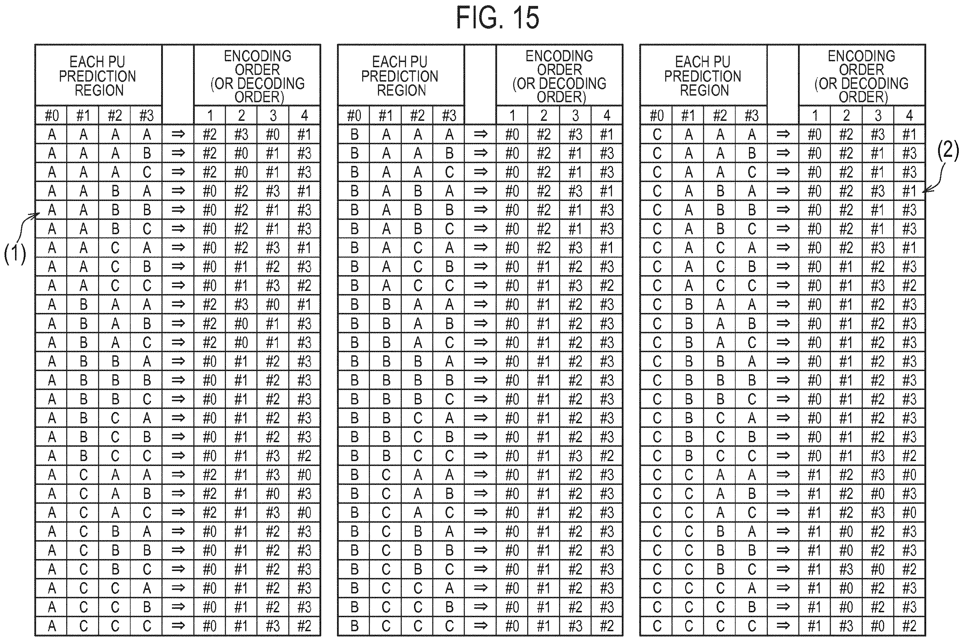

For example, if it is determined by the division determiner 12 to divide CU#1 into PU#0 to PU#3, the encoding order controller 13 is configured to determine the encoding order of the PUs based on the table illustrated in Fig. 15.

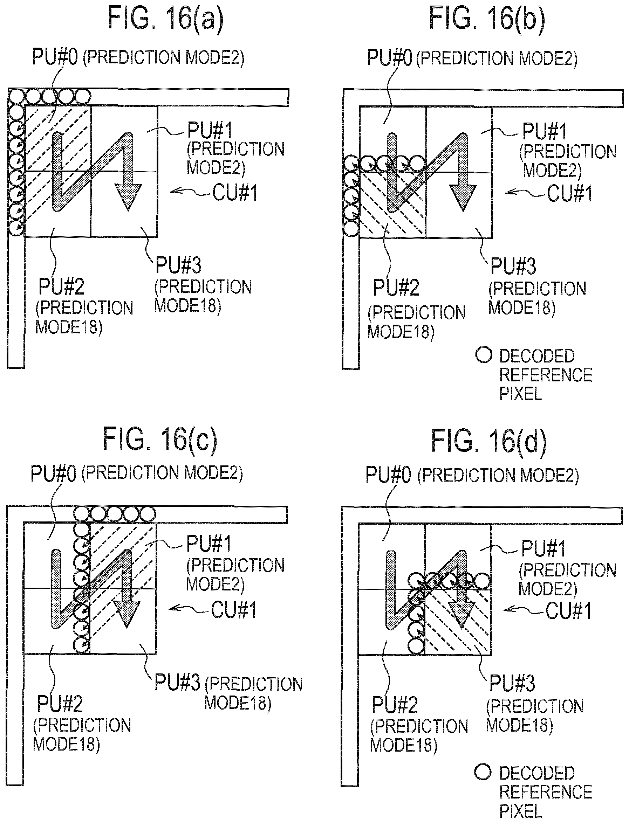

Specifically, if it is determined by the division determiner 12 to divide CU#1 into PU#0 to PU#3, and as in the case of (1) in Fig. 15, if the prediction mode in PU#0 belongs to the prediction region A, the prediction mode in PU#1 belongs to the prediction region A, the prediction mode in PU#2 belongs to the prediction region B, and the prediction mode in PU#3 belongs to the prediction region B (for example, as illustrated in Fig. 16, the prediction mode in PU#0 is "2", the prediction mode in PU#1 is "2", the prediction mode in PU#2 is "18", and the prediction mode in PU#3 is "18"), the encoding order controller 13 may be configured to adopt the encoding order such as PU#0 (upper left PU in CU#1) → PU#2 (lower left PU in CU#1) → PU#1 (upper right PU in CU#1) → PU#3 (lower right PU in CU#1) as illustrated in Figs. 16(a) to 16(d), instead of the conventional Z scan order as illustrated in Figs. 25(a) to 25(d).

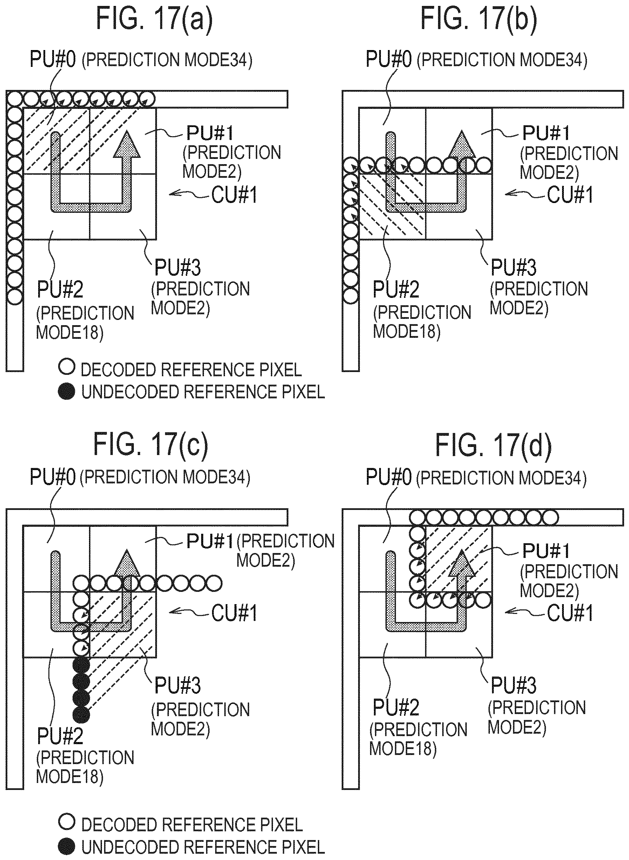

Alternatively, if it is determined by the division determiner 12 to divide CU#1 into PU#0 to PU#3, and as in the case of (2) in Fig. 15, if the prediction mode in PU#0 belongs to the prediction region C, the prediction mode in PU#1 belongs to the prediction region A, the prediction mode in PU#2 belongs to the prediction region B, and the prediction mode in PU#3 belongs to the prediction region A (for example, as illustrated in Fig. 17, the prediction mode in PU#0 is "34", the prediction mode in PU#1 is "2", the prediction mode in PU#2 is "18", and the prediction mode in PU#3 is "2"), the encoding order controller 13 may be configured to adopt the encoding order such as PU#0 (upper left PU in CU#1) → PU#2 (lower left PU in CU#1) → PU#3 (lower right PU in CU#1) → PU#1 (upper right PU in CU#1) as illustrated in Figs. 17(a) to 17(d), instead of the conventional Z scan order as illustrated in Figs. 25(a) to 25(d).

The combination of the prediction region and the encoding order (or decoding order) of each PU is not limited to the combination illustrated in Fig. 15, and other combinations may be used in a case where other effects (for example, improvement in encoding speed and simplification of encoding processing) can be expected.

Here, if the encoding order is changed as described above, PUs need to be recalculated by changing the content of the reference pixels to be used. Therefore, the recalculation controller 17 is configured to selectively delete and recalculate block data of a part of the memory 15 held for use as a reference image.

Specifically, if it is determined by the division determiner 12 to divide the CU (in this embodiment, CU#1) into a plurality of PUs (in the present embodiment, PU#0 to PU#3), and if the encoding order of the PUs determined by the encoding order controller 13 is not the conventional Z scan order as illustrated in Figs. 25(a) to 25(d), the recalculation controller 17 compares the encoding order of the PU determined by the encoding order controller 13 with the conventional Z scan order from the beginning, deletes the decoded image which has already been created for all the PUs subsequent to the PUs having different encoding orders, performs encoding processing in a new encoding order using new reference pixels, and stores the decoded image in the memory 15.

For example, if it is determined by the encoding order controller 13 to adopt the encoding order such as PU#0 (upper left PU in CU#1) → PU#2 (lower left PU in CU#1) → PU#1 (upper right PU in CU#1) → PU#3 (lower right PU in CU#1) (see Fig. 16(a) to 16(d)), the recalculation controller 17 deletes the decoded image that has been created with respect to PU#2 (lower left PU in CU#1), PU#1 (upper right PU in CU#1), and PU# 3 (lower right PU in CU#1) from PU#2 (lower left PU in CU#1) in the encoding order different from the conventional Z scan order, performs encoding processing in a new encoding order using new reference pixels, creates a decoded image, and stores the decoded image in the memory 15.

Similarly, if it is determined by the encoding order controller 13 to adopt the encoding order such as PU#0 (upper left PU in CU#1) → PU#2 (lower left PU in CU#1) → PU#3 (lower right PU in CU#1) → PU#1 (upper right PU in CU#1) (see Fig. 17(a) to 17(d)), the recalculation controller 17 deletes the decoded image that has been created with respect to PU#2 (lower left PU in CU#1), PU#1 (upper right PU in CU#1), and PU# 3 (lower right PU in CU#1) from PU#2 (lower left PU in CU#1) in the encoding order different from the conventional Z scan order, performs encoding processing in a new encoding order using new reference pixels, creates a decoded image, and stores the decoded image in the memory 15.

The decoded image generator 14 is configured to generate a decoded image for each PU based on the encoding order of the PU determined by the encoding order controller 13 and the method of dividing the CU (in the present embodiment, CU#1) into PUs (in the present embodiment, PU#0 to PU#3).

Specifically, if it is determined by the division determiner 12 to divide CU#1 into a plurality of PU#0 to PU#3, the decoded image generator 14 is configured to sequentially generate a decoded image for each PU according to the encoding order of PUs determined by the encoding order controller 13.

As illustrated in Fig. 13, the decoded image generator 14 includes a predictor 14a, a residual signal generator 14b, a transformer/quantizer14c, an inverse quantizer/inverse transformer 14d, and a locally decoded image generator 14e.

The predictor 14a is configured to generate a predicted image by using the prediction mode determined by the prediction mode determiner 11. That is, the predictor 14a is configured to determine the position of the reference pixel used for generating the predicted image.

Specifically, if it is determined by the division determiner 12 to divide CU#1 into a plurality of PU#0 to PU#3, and as in the case of (1) in Fig. 15, if the prediction mode in PU#0 belongs to the prediction region A, the prediction mode in PU#1 belongs to the prediction region A, the prediction mode in PU#2 belongs to the prediction region B, and the prediction mode in PU#3 belongs to the prediction region B (for example, the case of Fig. 16), the predictor 14a may be configured to generate a predicted image in the encoding order such as PU#0 (upper left PU in CU#1) → PU#2 (lower left PU in CU#1) → PU#1 (upper right PU in CU#1) → PU#3 (lower right PU in CU#1) as illustrated in Figs. 16(a) to 16(d).

Alternatively, if it is determined by the division determiner 12 to divide CU#1 into a plurality of PU#0 to PU#3, and as in the case of (2) in Fig. 15, if the prediction mode in PU#0 belongs to the prediction region C, the prediction mode in PU#1 belongs to the prediction region A, the prediction mode in PU#2 belongs to the prediction region B, and the prediction mode in PU#3 belongs to the prediction region A (for example, the case of Fig. 17), the predictor 14a may be configured to generate a predicted image in the encoding order such as PU#0 (upper left PU in CU#1) → PU#2 (lower left PU in CU#1) → PU#3 (lower right PU in CU#1) → PU#1 (upper right PU in CU#1) as illustrated in Figs. 17(a) to 17(d).

Here, the predictor 14a of the decoded image generator 14 may be configured to generate a predicted image in consideration of the distance between the pixels of PU#0 to PU#3 and the decoded reference pixels.

For example, as illustrated in Fig. 17(d), the predictor 14a may be configured to generate a predicted image of PU#1 by using the decoded reference pixels in the PU neighboring to the lower side of PU#1.

The residual signal generator 14b is configured to generate a residual signal from a difference between the predicted image generated by the predictor 14a and the original image.

The transformer/quantizer14c is configured to perform transformation processing (for example, orthogonal transformation processing) and quantization processing on the residual signal generated by the residual signal generator 14b to generate quantized transformation coefficients.

The inverse quantizer/inverse transformer 14d is configured to perform inverse quantization processing and inverse orthogonal transformation processing again on the quantized transformation coefficients generated by the transformer/quantizer14c and generate a residual signal.

The locally decoded image generator 14e is configured to generate the locally decoded image by adding the predicted image generated by the predictor 14a to the residual signal generated by the inverse quantizer/inverse transformer 14d.

The entropy coder 16 is configured to output a stream by performing entropy coding processing on flag information including the prediction mode or the like determined by the prediction mode determiner 11 or the quantized transformation coefficients.

The memory 15 is configured to hold the decoded image for each PU generated by the decoded image generator 14 so as to be usable as a reference image.

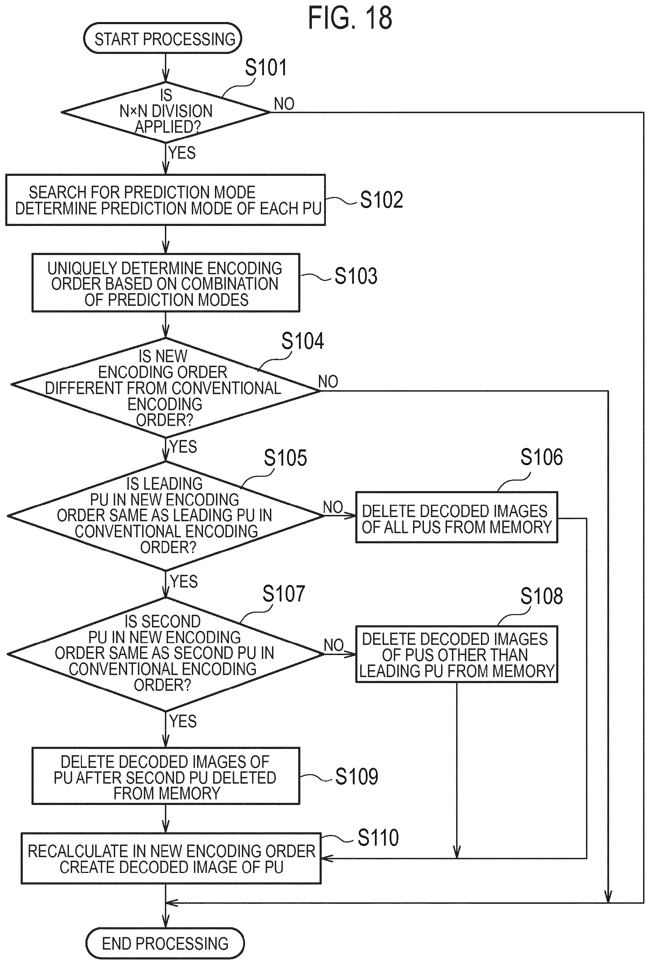

An example of the operation of the encoding device 1 according to the present embodiment will be described with reference to Fig. 18.

As illustrated in Fig. 18, in step S101, the encoding device 1 determines whether to divide the CU (in the present embodiment, CU#1) into a plurality of PUs (in the present embodiment, PU#0 to PU#3) (whether N×N division is applied).

If "Yes", the operation proceeds to step S102, and if "No", the operation ends.

In step S102, the encoding device 1 determines the prediction mode to be applied to each of PU#0 to PU#3.

In step S103, the encoding device 1 uniquely determines the encoding order of the PUs based on the combination of the prediction modes in each of the PUs.

In step S104, the encoding device 1 determines whether the encoding order of the PUs determined in step S103 is different from the conventional Z scan order.

If "Yes", the operation proceeds to step S105, and if "No", the operation ends.

In step S105, the encoding device 1 determines whether the leading PU in the encoding order of the PUs determined in step S103 is the same as the leading PU in the conventional Z scan order.

If "Yes", the operation proceeds to step S107, and if "No", the operation proceeds to step S106.

In step S106, the encoding device 1 deletes the decoded images of all the PU#0 to PU#3 from the memory. After that, the operation proceeds to step S110, and the encoding device 1 generates the decoded images of all PU#0 to PU#3 by performing recalculation by using the encoding order of the PUs determined in step S103.

In step S107, the encoding device 1 determines whether the second PU in the encoding order of the PUs determined in step S103 is the same as the second PU in the conventional Z scan order.

If "Yes", the operation proceeds to step S109, and if "No", the operation proceeds to step S108.

In step S108, the encoding device 1 deletes the decoded images of PUs other than the leading PU from the memory. After that, the operation proceeds to step S110, and the encoding device 1 generates the decoded images subsequent to the second PU by performing recalculation by using the encoding order of the PUs determined in step S103.

In step S109, the encoding device 1 deletes the decoded images of PUs from the third PU from the memory, and in step S110, the encoding device 1 generates the decoded images of PUs from the third PU by performing recalculation by using the encoding order of PUs determined in step S103.

According to the encoding device 1 according to the present embodiment, it is possible to prevent reduction in encoding efficiency without increasing the amount of data to be transmitted.

In addition, the decoding device 3 according to the present embodiment is configured to decode an image of a frame unit constituting a video by dividing the image into CUs. In addition, as in the encoding device 1 according to the present embodiment, the decoding device 3 according to the present embodiment is configured to be able to divide a CU into a plurality of PUs.

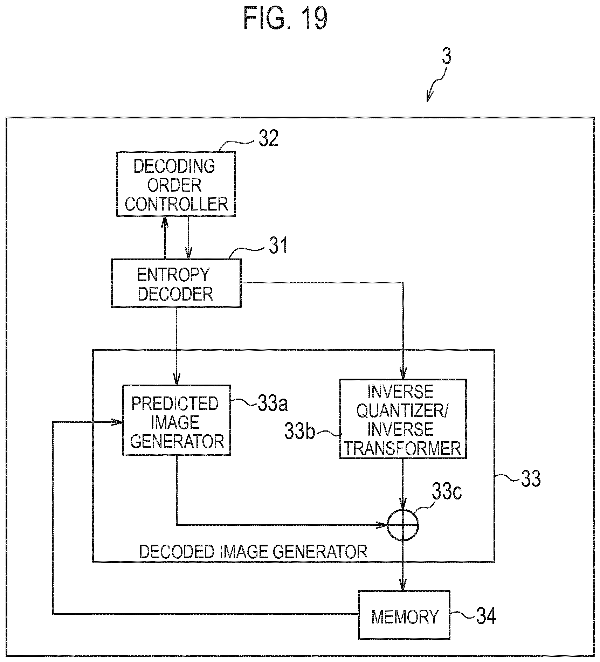

As illustrated in Fig. 19, the decoding device 3 according to the present embodiment includes an entropy decoder 21, a decoding order controller 22, a decoded image generator 23, and a memory 24.

The entropy decoder 21 is configured to decode transformation coefficients, flag information, or the like from the stream output from the encoding device 1 by applying entropy decoding processing on the stream output from the encoding device 1. Here, the transformation coefficient is the quantized transformation coefficient obtained as a signal encoded by dividing an original image of a frame unit into CUs by the encoding device 1. In addition, the flag information includes accompanying information such as the prediction mode.

The decoding order controller 22 is configured to determine the decoding order of PUs based on the prediction mode of each PU.

Specifically, the decoding order controller 22 is configured to determine the decoding order of the PUs in the CU according to the flag indicating whether the N×N division output by the entropy decoder 21 has been performed (whether the CU is divided into the plurality of PUs) and the direction of the prediction mode.

Here, the decoding order controller 22 may be configured to determine the decoding order of the PUs so as to use the largest number of decoded reference pixels when generating the predicted image.

For example, as in the encoding order controller 13, if CU#1 is divided into PU#0 to PU#3, the decoding order controller 22 may be configured to determine the decoding order of the PUs based on the same table as the table illustrated in Fig. 15 held by the encoding device 1.

Specifically, if CU#1 is divided into PU#0 to PU#3, and as in the case of (1) in Fig. 15, if the prediction mode in PU#0 belongs to the prediction region A, the prediction mode in PU#1 belongs to the prediction region A, the prediction mode in PU#2 belongs to the prediction region B, and the prediction mode in PU#3 belongs to the prediction region B (for example, as illustrated in Fig. 16, the prediction mode in PU#0 is "2", the prediction mode in PU#1 is "2", the prediction mode in PU#2 is "18", and the prediction mode in PU#3 is "18"), the decoding order controller 22 may be configured to adopt the decoding order such as PU#0 (upper left PU in CU#1) → PU#2 (lower left PU in CU#1) → PU#1 (upper right PU in CU#1) → PU#3 (lower right PU in CU#1) as illustrated in Figs. 16(a) to 16(d), instead of the conventional Z scan order as illustrated in Figs. 25(a) to 25(d).

Alternatively, if CU#1 is divided into PU#0 to PU#3, and as in the case of (2) in Fig. 15, if the prediction mode in PU#0 belongs to the prediction region C, the prediction mode in PU#1 belongs to the prediction region A, the prediction mode in PU#2 belongs to the prediction region B, and the prediction mode in PU#3 belongs to the prediction region A (for example, as illustrated in Fig. 17, the prediction mode in PU#0 is "34", the prediction mode in PU#1 is "2", the prediction mode in PU#2 is "18", and the prediction mode in PU#3 is "2"), the decoding order controller 22 may be configured to adopt the decoding order such as PU#0 (upper left PU in CU#1) → PU#2 (lower left PU in CU#1) → PU#3 (lower right PU in CU#1) → PU#1 (upper right PU in CU#1) as illustrated in Figs. 17(a) to 17(d), instead of the conventional Z scan order as illustrated in Figs. 25(a) to 25(d).

The decoded image generator 23 is configured to generate a decoded image for each PU based on the decoding order of the PU determined by the decoding order controller 22 and the method of dividing the CU (in the present embodiment, CU#1) into PUs (in the present embodiment, PU#0 to PU#3).

Specifically, if CU#1 is divided into a plurality of PU#0 to PU#3, the decoded image generator 23 sequentially generates a decoded image for each PU according to the encoding order of the PUs determined by the decoding order controller 22.

More specifically, if CU#1 is divided into a plurality of PU#0 to PU#3, the decoded image generator 23 is configured to generate a decoded image for each PU by sequentially performing predicted image generation processing, inverse quantization processing, and inverse orthogonal transformation processing on the quantized transformation coefficients output by the entropy decoder 21 according to the decoding order determined by the decoding order controller 22.

As illustrated in Fig. 15, the decoded image generator 23 includes a predicted image generator 23a, an inverse quantizer/inverse transformer 23b, and a locally decoded image generator 23c.

The predicted image generator 23a may be configured to generate the predicted image by using the prediction mode output by the entropy decoder 21 according to the decoding order determined by the decoding order controller 22.

Specifically, if CU#1 is divided into a plurality of PU#0 to PU#3, and as in the case of (1) in Fig. 15, if the prediction mode in PU#0 belongs to the prediction region A, the prediction mode in PU#1 belongs to the prediction region A, the prediction mode in PU#2 belongs to the prediction region B, and the prediction mode in PU#3 belongs to the prediction region B (for example, the case of Fig. 16(a) to 16(d)), the predicted image generator 23a may be configured to generate a predicted image in the decoding order such as PU#0 (upper left PU in CU#1) → PU#2 (lower left PU in CU#1) → PU#1 (upper right PU in CU#1) → PU#3 (lower right PU in CU#1) as illustrated in Figs. 16(a) to 16(d).

Alternatively, if CU#1 is divided into a plurality of PU#0 to PU#3, and as in the case of (2) in Fig. 15, if the prediction mode in PU#0 belongs to the prediction region C, the prediction mode in PU#1 belongs to the prediction region A, the prediction mode in PU#2 belongs to the prediction region B, and the prediction mode in PU#3 belongs to the prediction region A (for example, the case of Fig. 17), the predictor 23a may be configured to generate a predicted image in the decoding order such as PU#0 (upper left PU in CU#1) → PU#2 (lower left PU in CU#1) → PU#3 (lower right PU in CU#1) → PU#1 (upper right PU in CU#1) as illustrated in Figs. 17(a) to 17(d).

Here, the predicted image generator 23a of the decoded image generator 23 may be configured to generate a predicted image in consideration of the distance between the pixels of PU#0 to PU#3 and the decoded reference pixels.

For example, as illustrated in Fig. 17(d), the predicted image generator 23a may be configured to generate a predicted image of PU#1 by using the decoded reference pixels in the PU neighboring to the lower side of PU#1.

The inverse quantizer/inverse transformer 23b is configured to generate a residual signal by performing inverse quantization processing and inverse transformation processing (for example, inverse orthogonal transformation processing) on the quantized transformation coefficients output by the entropy decoder 21.

The locally decoded image generator 23c is configured to generate a decoded image for each PU by adding the predicted image generated by the predictor 23a and the residual signal generated by the inverse quantizer/inverse transformer 23b.

The memory 24 is configured to hold the decoded image for each PU generated by the decoded image generator 23 so as to be usable as a reference image for intra prediction and inter prediction.

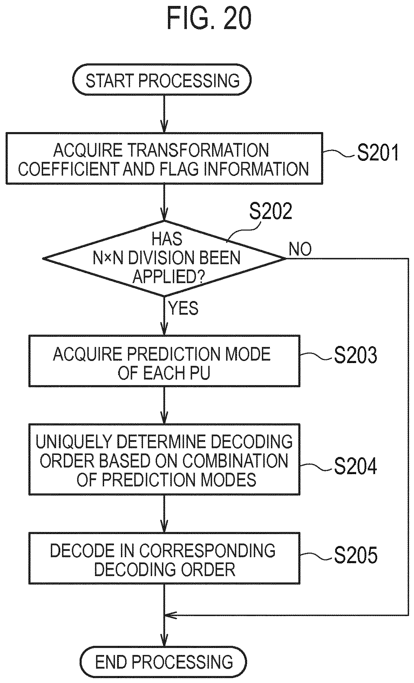

An example of the operation of the decoding device 3 according to the present embodiment will be described with reference to Fig. 20.

As illustrated in Fig. 20, in step S201, the decoding device 3 acquires transformation coefficients or flag information from the stream output from the encoding device 1.

In step S202, the decoding device 3 determines whether CU (in the present embodiment, CU#1) is divided into a plurality of PUs (in the present embodiment, PU#0 to PU#3) (whether N×N division is applied) based on the flag information included in the stream output from the encoding device 1.

If "Yes", the operation proceeds to step S203, and if "No", the operation ends.

In step S203, the decoding device 3 acquires the prediction mode of each of PU#0 to PU#3 based on the flag information included in the stream output from the encoding device 1.

In step S204, the decoding device 3 uniquely determines the decoding order of the PUs based on the combination of the prediction modes in each of PU#0 to PU#3.

In step S205, the decoding device 3 generates decoded images of PU#0 to PU#3 according to the decoding order of the PUs determined in step S204.

According to the decoding device 3 according to the present embodiment, it is possible to prevent reduction in encoding efficiency without increasing the amount of data to be transmitted.

### (Fifth Embodiment)

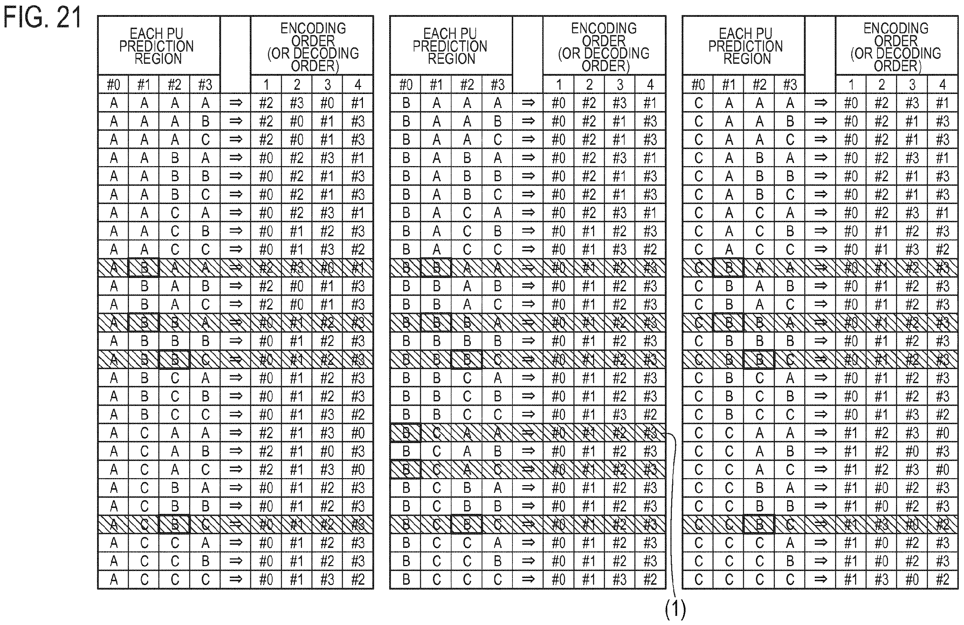

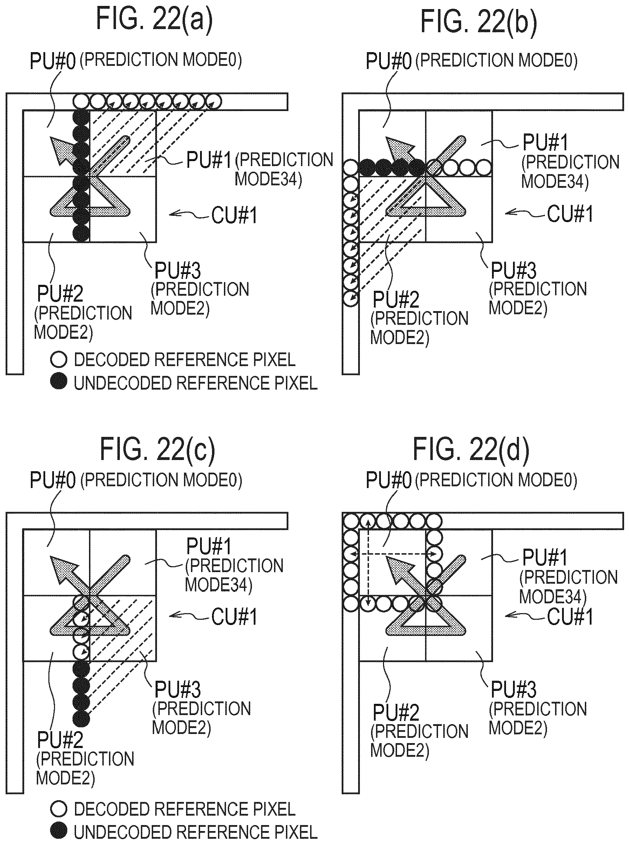

Hereinafter, referring to Figs. 21 and 22, an encoding device 1 and a decoding device 3 according to a fifth embodiment of the present invention will be described, focusing on the difference from the encoding device 1 and the decoding device 3 according to the fourth embodiment.

In the encoding device 1 according to the present embodiment, the predictor 14a of the decoded image generator 14 is configured to generate a predicted image in consideration of whether the prediction mode using decoded reference pixels in a plurality of PUs neighboring to the PU is used as the prediction mode.

Although there is the planar prediction or the DC prediction as the prediction mode using decoded reference pixels in a plurality of PUs neighboring to the PU, the prediction mode is not limited thereto, and it may be an arbitrary prediction mode using decoded reference pixels in a plurality of PUs neighboring to the PU.

For example, in the encoding device 1 of the present embodiment, if the pixels in the PU in three directions or all directions neighboring to the PU to be encoded in the encoding order determined by the prediction mode determiner 11 have been decoded, and if the planar prediction or the DC prediction is assigned to such PUs, the predictor 14a of the decoded image generator 14 may be configured to generate a predicted image by using all available reference pixels, and the encoding order controller 13 may be configured to determine the encoding order of PUs based on the table illustrated in Fig. 21.

Here, the table illustrated in Fig. 21 is different from the table illustrated in Fig. 15 in the portion indicated by hatching.

The table illustrated in Fig. 15 is created by prioritizing reduction in the time required for encoding processing (or decoding processing). That is, as much as possible, the number of PUs requiring recalculation in the encoding processing (or decoding processing) is reduced by approximating to the conventional Z scan order as illustrated in Figs. 25(a) to 25(d).

On the other hand, in the table illustrated in Fig. 21, if the planar prediction or the DC prediction is used, priority is given to improvement of prediction accuracy in consideration of utilization of reference pixels in PU that is neighboring to PU to be encoded (to be decoded) in three directions or all directions.

Therefore, in the portion of the prediction region B in the hatched portion in the table illustrated in Fig. 21, only when the prediction mode is the planar prediction or the DC prediction, the encoding order controller 13 may be configured to determine the encoding order of the PUs based on the table illustrated in Fig. 21, and otherwise determine the encoding order of the PUs based on the table illustrated in Fig. 15.

In this manner, by using the table illustrated in Fig. 15 and the table illustrated in Fig. 21 in combination, it is possible to improve the prediction system without increasing the time required for the encoding processing (or decoding processing).

The combination of the prediction region and the encoding order (or decoding order) of each PU is not limited to the combination illustrated in Fig. 21, and other combinations may be used in a case where other effects (for example, improvement in encoding speed and simplification of encoding processing) can be expected.

Specifically, if it is determined by the division determiner 12 to divide CU#1 into PU#0 to PU#3, as in the case of (1) of Fig. 21, if the prediction mode in PU#0 belongs to the prediction region B, the prediction mode in PU#1 belongs to the prediction region C, the prediction mode in PU#2 belongs to the prediction region A, and the prediction mode in PU#3 belongs to the prediction region A, and if the prediction mode in PU#0 belonging to the prediction region B is "0" or "1" (planar prediction or DC prediction), the encoding order controller 13 may be configured to adopt the encoding order such as PU#1 (upper right PU in CU#1) → PU#2 (lower left PU in CU#1) → PU#3 (lower right PU in CU#1) → PU#0 (upper left PU in CU#1) as illustrated in Figs. 22(a) to 22(d).

On the other hand, if it is determined by the division determiner 12 to divide CU#1 into PU#0 to PU#3, as in the case of (1) of Fig. 21, if the prediction mode in PU#0 belongs to the prediction region B, the prediction mode in PU#1 belongs to the prediction region C, the prediction mode in PU#2 belongs to the prediction region A, and the prediction mode in PU#3 belongs to the prediction region A, and if the prediction mode in PU#0 belonging to the prediction region B is not "0" or "1" (not planar prediction or DC prediction), the encoding order controller 13 may be configured to adopt the encoding order such as PU#0 (upper left PU in CU#1) → PU#1 (upper right PU in CU#1) → PU#2 (lower left PU in CU#1) → PU#3 (lower right PU in CU#1).

In this manner, if it is determined by the division determiner 12 to divide CU#1 into PU#0 to PU#3, and as in the case of (1) in Fig. 21, if the prediction mode in PU#0 belongs to the prediction region B, the prediction mode in PU#1 belongs to the prediction region C, the prediction mode in PU#2 belongs to the prediction region A, and the prediction mode in PU#3 belongs to the prediction region A, the predicted images of PU#1 to PU#3 are the same as those in the case of the above-described fourth embodiment. However, in PU#0, since the pixels in the PU neighboring to PU#0 in all directions have been decoded, it is possible to further improve the prediction accuracy (see Fig. 22(d)) as compared with the case of the above-described fourth embodiment.

In the decoding device 3 according to the present embodiment, as in the encoding device 1 according to the present embodiment, the predictor 23a of the decoded image generator 23 is configured to generate a predicted image in consideration of whether the prediction mode using decoded reference pixels in a plurality of PUs neighboring to the PU is used as the prediction mode.

### (Modification)

In the encoding devices 1 according to the first to third embodiments described above, the encoding order controller 13 is configured to determine the encoding order so as to use the largest number of decoded reference pixels when generating the predicted image.

Here, the encoding order controller 13 may be configured to determine the encoding order so as to use the largest number of decoded reference pixels when generating the predicted image in a method different from the encoding order controllers 13 of the encoding devices 1 according to the first to third embodiments described above.

Similarly, in the decoding devices 3 according to the first to third embodiments described above, the decoding order controller 32 is configured to determine the decoding order so as to use the largest number of decoded reference pixels when generating the predicted image.

Here, the decoding order controller 32 may be configured to determine the decoding order so as to use the largest number of decoded reference pixels when generating the predicted image in a method different from the decoding order controllers 32 of the decoding devices 3 according to the first to third embodiments described above.

In the encoding devices 1 according to the first to third embodiments described above, the decoded image generator 14 may be configured to generate a predicted image in consideration of the distance between the TU pixel and the decoded pixel.

For example, as in the encoding device 1 according to the second embodiment described above, the predictor 14a in the decoded image generator 14 may be configured to set decoded reference pixels neighboring on the left side and the lower side as reference pixels used in generating a predicted image with respect to TU#A1 (upper left TU in CU#A) and TU#A2 (upper right TU in CU#A) where the neighboring lower reference pixels are decoded in consideration of the distance between the pixel of TU and the decoded pixel (see Figs. 6(c) and 6(d)).

Alternatively, as in the encoding device 1 according to the third embodiment described above, the predictor 14a in the decoded image generator 14 may be configured to perform intra prediction by changing to another predefined prediction such as linear interpolation using all available reference pixels in consideration of the distance between the TU pixel and the decoded pixel.

The decoded image generator 14 may be configured to generate a predicted image in consideration of the distance between the TU pixel and the decoded pixel by another method.

Similarly, in the decoding devices 3 according to the first to third embodiments described above, the decoded image generator 33 may be configured to generate a predicted image in consideration of the distance between the TU pixel and the decoded pixel.

For example, as in the decoding device 3 according to the second embodiment described above, the predicted image generator 33a in the decoded image generator 33 may be configured to set decoded reference pixels neighboring on the left side and the lower side as reference pixels used in generating a predicted image with respect to TU#A1 (upper left TU in CU#A) and TU#A2 (upper right TU in CU#A) where the neighboring lower reference pixels are decoded in consideration of the distance between the pixel of TU and the decoded pixel (see Figs. 6(c) and 6(d)).

Alternatively, as in the decoding device 3 according to the third embodiment described above, the predicted image generator 33a in the decoded image generator 33 may be configured to perform intra prediction by changing to another predefined prediction such as linear interpolation using all available reference pixels in consideration of the distance between the TU pixel and the decoded pixel.

The decoded image generator 33 may be configured to generate a predicted image in consideration of the distance between the TU pixel and the decoded pixel by another method.

In addition, if the division number or the division shape when dividing the CU into the plurality of TUs is different from that in the first to third embodiments described above, the encoding order controller 13 and the decoding order controller 32 may be configured to, for example, assign the processing order index to each TU and determine the encoding order, the decoding order, and the prediction processing method based on the processing order index.

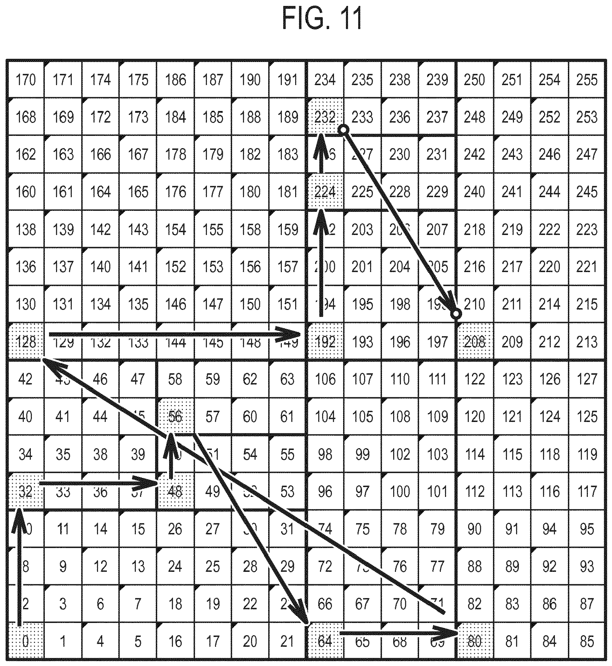

Here, a plurality of processing order indices may be prepared for each direction indicated by the prediction mode. For example, if the direction prediction is performed from the lower left to the upper right, the encoding order controller 13 and the decoding order controller 32 may be configured to determine the encoding order and the decoding order by using the processing order index as illustrated in Fig. 11.

The processing order index may be generated by predefining the encoding order and the decoding order at the time of finely dividing the target CU into the minimum TU. By using such a processing order index, it is possible to uniquely determine the processing order even when the target CU is a division shape that is not a square shape as specified by the HEVC.

Specifically, the processing order index is divided in the same manner as the division shape of the TU, and the encoding may be performed in ascending order of the index values (for example, "0", "32", "48", "56", "64", "80", "128", "192", "208", "224", or "232" in Fig. 11) positioned at the lower left in each divided processing order index.

In addition, as illustrated in the third embodiment, in determining whether neighboring pixels have been decoded, it is possible to easily determine whether the index value positioned at the lower left in the target TU is larger or smaller than the index value positioned at the lower left in the surrounding TU. For example, if the index value positioned at the lower left in the target TU is larger than the index value positioned at the lower left in the surrounding TU, it can be easily determined that the pixels in the surrounding TU have been decoded.

In the above example, although the processing order indices in the case of performing the direction prediction from the lower left to the upper right are shown, the processing order index in the case of performing the direction prediction from the upper right to the lower left can also be similarly generated by predefining the encoding order and the decoding order when the CU is finely divided up to the minimum TU.

### (Other Embodiments)

As described above, the present invention has been described with reference to the above-described embodiments, but it should not be understood that the description and drawings constituting a part of the disclosure in such embodiments limit the present invention. From this disclosure, various alternative embodiments, examples, and operational technologies will become apparent to those skilled in the art.

Although not particularly described in the above embodiments, a program for causing a computer to perform each process performed by the encoding device 1 and the decoding device 3 described above may be provided. In addition, the program may be recorded on a computer-readable medium. The program may be installed on the computer by using the computer-readable medium. Here, the computer-readable medium on which the program is recorded may be a non-transitory recording medium. The non-transitory recording medium is not particularly limited, but may be a recording medium such as, for example, CD-ROM and DVD-ROM.

Alternatively, a chip constituted by a memory that stores a program for realizing at least part of the functions of the encoding device 1 and the decoding device 3 and a processor that performs the program stored in the memory may be provided.

### REFERENCE SIGNS LIST

- 1: encoding device
- 11: prediction mode determiner
- 12: division determiner
- 13: encoding order controller
- 14: decoded image generator
- 14a: predictor
- 14b: residual signal generator
- 14c: transformation/quantization unit
- 14d: inverse quantizer/inverse transformer
- 14e: locally decoded image generator
- 15: memory
- 16: entropy coder
- 17: recalculation controller
- 3: decoding device
- 31: entropy decoder
- 32: decoding order controller
- 33: decoded image generator
- 33a: predicted image generator
- 33b: inverse quantizer/inverse transformer
- 33c: locally decoded image generator
- 34: memory

## Claims

1. An encoding device configured to encode an original image of a frame unit constituting a video by dividing the original image into encoding target blocks, the encoding device comprising:
an encoding order controller configured to determine an encoding order of transformation blocks in the encoding target blocks based on a prediction mode; and
a decoded image generator configured to generate a decoded image based on the encoding order and a method of dividing the encoding target block into the transformation blocks.

2. The encoding device according to claim 1, wherein the encoding order controller is configured to determine the encoding order so as to use a largest number of decoded reference pixels when generating a predicted image.

3. The encoding device according to claim 1 or 2, wherein the decoded image generator is configured to generate a predicted image in consideration of a distance between a pixel of the transformation block and a decoded reference pixel.

4. A decoding device configured to perform decoding by dividing an original image of a frame unit constituting a video into encoding target blocks, the decoding device comprising:
a decoding order controller configured to determine a decoding order of transformation blocks in the encoding target blocks based on a prediction mode; and
a decoded image generator configured to generate a decoded image based on the decoding order and a method of dividing the encoding target block into the transformation blocks.

5. The decoding device according to claim 4, wherein the decoding order controller is configured to determine the decoding order so as to use a largest number of decoded reference pixels when generating a predicted image.

6. The decoding device according to claim 4 or 5, wherein the decoded image generator is configured to generate a predicted image in consideration of a distance between a pixel of the transformation block and a decoded reference pixel.

7. An encoding device configured to encode an original image of a frame unit constituting a video by dividing the original image into encoding target blocks, the encoding device comprising:
an encoding order controller configured to, if the encoding target block is divided into blocks to which prediction modes are allocated, determine an encoding order of the blocks based on a combination of the prediction modes in each of the blocks; and
a decoded image generator configured to generate a decoded image based on the encoding order and a method of dividing the encoding target block into the blocks.

8. The encoding device according to claim 7, wherein the encoding order controller is configured to determine the encoding order so as to use a largest number of decoded reference pixels when generating a predicted image.

9. The encoding device according to claim 7 or 8, wherein the decoded image generator is configured to generate a predicted image in consideration of a distance between a pixel of the block and a decoded reference pixel.

10. The encoding device according to any one of claims 7 to 9, wherein the decoded image generator is configured to generate a predicted image in consideration of whether a prediction mode using decoded reference pixels in a plurality of blocks neighboring to the block is used as the prediction mode.

11. A decoding device configured to perform decoding by dividing an image of a frame unit constituting a video into encoding target blocks, the decoding device comprising:
a decoding order controller configured to, if the encoding target block is divided into blocks to which prediction modes are allocated, determine a decoding order of the blocks based on a combination of the prediction modes in each of the blocks; and
a decoded image generator configured to generate a decoded image based on the decoding order and a method of dividing the encoding target block into the blocks.

12. The decoding device according to claim 11, wherein the decoding order controller is configured to determine the decoding order so as to use a largest number of decoded reference pixels when generating a predicted image.

13. The decoding device according to claim 11 or 12, wherein the decoded image generator is configured to generate a predicted image in consideration of a distance between a pixel of the block and a decoded reference pixel.

14. The decoding device according to any one of claim 11 to 13, wherein the decoded image generator is configured to generate a predicted image in consideration of whether a prediction mode using decoded reference pixels in a plurality of blocks neighboring to the block is used as the prediction mode.

15. A program for causing a computer to function as the encoding device according to any one of claims 1 to 3 and 7 to 10.

16. A program for causing a computer to function as the decoding device according to any one of claims 4 to 6 and 11 to 14.
